(19) Europäisches Patentamt
European Patent Office
Office européen des brevets

(11) **EP 3 525 388 B1**

## (12) EUROPEAN PATENT SPECIFICATION

(45) Date of publication and mention
of the grant of the patent:
**25.08.2021 Bulletin 2021/34**

(51) Int Cl.:
*H04L 9/00* (2006.01)     *G06N 20/00* (2019.01)

(21) Application number: **19153349.6**

(22) Date of filing: **23.01.2019**

(54) **PRIVATIZED MACHINE LEARNING USING GENERATIVE ADVERSARIAL NETWORKS**

PRIVATISIERTES MASCHINENLERNEN UNTER VERWENDUNG GENERATIVER
GEGNERISCHER NETZWERKE

APPRENTISSAGE MACHINE PRIVATISÉ UTILISANT DES RÉSEAUX CONTRADICTOIRES
GÉNÉRATIFS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.02.2018 US 201815892246**

(43) Date of publication of application:
**14.08.2019 Bulletin 2019/33**

(73) Proprietor: **Apple Inc.**
**Cupertino, CA 95014 (US)**

(72) Inventors:
• **BHOWMICK, Abhishek**
**Cupertino, CA 95014 (US)**
• **VYRROS, Andrew H.**
**Cupertion, CA 95014 (US)**
• **ROGERS, Ryan M.**
**Cupertino, CA 95014 (US)**

(74) Representative: **Barnfather, Karl Jon**
**Withers & Rogers LLP**
**4 More London Riverside**
**London SE1 2AU (GB)**

(56) References cited:
**US-B1- 9 275 347     US-B1- 9 594 741**

• **CHANG JONATHAN ET AL: "Learning
representations of emotional speech with deep
convolutional generative adversarial networks",
2017 IEEE INTERNATIONAL CONFERENCE ON
ACOUSTICS, SPEECH AND SIGNAL
PROCESSING (ICASSP), IEEE, 5 March 2017
(2017-03-05), pages 2746-2750, XP033258915,
DOI: 10.1109/ICASSP.2017.7952656 [retrieved on
2017-06-16]**
• **LIU YANG ET AL: "Secure Multi-label
Classification over Encrypted Data in Cloud", 17
October 2017 (2017-10-17), INTERNATIONAL
CONFERENCE ON COMPUTER ANALYSIS OF
IMAGES AND PATTERNS. CAIP 2017:
COMPUTER ANALYSIS OF IMAGES AND
PATTERNS; [LECTURE NOTES IN COMPUTER
SCIENCE; LECT.NOTES COMPUTER],
SPRINGER, BERLIN, HEIDELBERG, PAGE(S) 57
- 73, XP047451059, ISBN: 978-3-642-17318-9
[retrieved on 2017-10-17] * abstract ***
• **THORE GRAEPEL ET AL: "ML Confidential:
Machine Learning on Encrypted Data", 28
November 2012 (2012-11-28), INFORMATION
SECURITY AND CRYPTOLOGY ICISC 2012,
SPRINGER BERLIN HEIDELBERG, BERLIN,
HEIDELBERG, PAGE(S) 1 - 21, XP047027299,
ISBN: 978-3-642-37681-8 * abstract * * page 1 -
page 5 ***

- **BIN LIU ET AL: "Cloud-enabled privacy-preserving collaborative learning for mobile sensing", EMBEDDED NETWORK SENSOR SYSTEMS, ACM, 2 PENN PLAZA, SUITE 701 NEW YORK NY 10121-0701 USA, 6 November 2012 (2012-11-06), pages 57-70, XP058029982, DOI: 10.1145/2426656.2426663 ISBN: 978-1-4503-1169-4**

- **BRILAND HITAJ ET AL: "Deep Models Under the GAN: Information Leakage from Collaborative Deep Learning", ARXIV.ORG, CORNELL UNIVERSITY LIBRARY, 201 OLIN LIBRARY CORNELL UNIVERSITY ITHACA, NY 14853, 24 February 2017 (2017-02-24), XP080748410,**

**Description**

TECHNICAL FIELD

This disclosure relates generally to the field of machine learning via privatized data. More specifically, this disclosure relates to a system that implements one or more privacy mechanisms to enable privatized machine learning using generative adversarial networks.

BACKGROUND

Machine learning is an application of artificial intelligence that enables a complex system to automatically learn and improve from experience without being explicitly programmed. The accuracy and effectiveness of machine learning models can depend in part on the data used to train those models. For example, machine learning classifiers can be trained using a labeled data set, in which samples of data that the classifier is to learn to recognize are provided to the classifier along with one or more labels that identify a classification for the sample. Generally, a larger training dataset results in a more accurate classifier. However, current techniques used to prepare training datasets may be painstaking, time consuming, and expensive, particularly techniques that involve the manual labeling of data to generate the training dataset. Known art includes: CHANG JONATHAN ET AL: "Learning representations of emotional speech with deep convolutional generative adversarial networks ", 2017 IEEE INTERNATIONAL CONFERENCE ON ACOUSTICS, SPEECH AND SIGNAL PROCESSING (ICASSP), IEEE, (20170305)*; US 9594741 B1 (which describes learning new words); LIU YANG ET AL, Secure Multi-label Classification over Encrypted Data in Cloud, INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 57- 73; US 9275347 B1 (which describes an online content classifier which updates a classification score based on a count of labeled data classified by machine deep learning;* THORE GRAEPEL ET AL, ML Confidential: Machine Learning on Encrypted Data, INFORMATION SECURITY AND CRYPTOLOGY ICISC 2012, SPRINGER BERLIN HEIDELBERG, BERLIN, HEIDELBERG, PAGE(S) 1 - 21*;;* BIN LIU ET AL, "Cloud-enabled privacy-preserving collaborative learning for mobile sensing", EMBEDDED NETWORK SENSOR SYSTEMS, ACM, 2 PENN PLAZA, SUITE 701 NEW YORK NY 10121-0701 USA, (20121106), doi:10.1145/2426656.2426663, ISBN 978-1-4503-1169-4, pages 57- 70*; and* BRILAND HITAJ ETAL, "Deep Models Under the GAN: Information Leakage from Collaborative Deep Learning", ARXIV.ORG, CORNELL UNIVERSITY LIBRARY, 201 OLIN LIBRARY CORNELL UNIVERSITY ITHACA, NY 14853*.*

SUMMARY

The aforementioned problem is solved by the features of the independent claims.Further embodiments are the subject-matter of the dependent claims. Embodiments described herein provide a technique to crowdsource labeling of training data for a machine learning model while maintaining the privacy of the data provided by crowdsourcing participants. Client devices can be used to generate proposed labels for a unit of data to be used in a training dataset. One or more privacy mechanisms are used to protect user data when transmitting the data to a server.

One embodiment provides for a mobile electronic device comprising a non-transitory machine-readable medium to store instructions, the instructions to cause the mobile electronic device to receive a set of labeled data from a server; receive a unit of data from the server, the unit of data of a same type of data as the set of labeled data; determine a proposed label for the unit of data via a machine learning model on the mobile electronic device, the machine learning model to determine the proposed label for the unit of data based on the set of labeled data from the server and a set of unlabeled data associated with the mobile electronic device; encode the proposed label via a privacy algorithm to generate a privatized encoding of the proposed label; and transmit the privatized encoding of the proposed label to the server.

One embodiment provides for a data processing system comprising a memory device to store instructions and one or more processors to execute the instructions stored on the memory device. The instructions cause the data processing system to perform operations comprising sending a set of labeled data to a set of multiple mobile electronic devices, each of the mobile electronic devices including a first machine learning model; sending a unit of data to the set of multiple mobile electronic devices, the set of multiple electronic devices to generate a set of proposed labels for the unit of data; receiving a set of proposed labels for the unit of data from the set of mobile electronic devices, the set of proposed labels encoded to mask individual contributors of each proposed label in the set of proposed labels; processing the set of proposed labels to determine a label to assign to the unit of data; and adding the unit of data and the label to a training set for use in training a second machine learning model.

Other features of the present embodiments will be apparent from the accompanying drawings and from the detailed description, which follows.

BRIEF DESCRIPTION OF THE DRAWINGS

Embodiments of the disclosure are illustrated by way of example, and not by way of limitation, in the figures of the accompanying drawings in which like reference numerals refer to similar elements.

**Figures 1A-1B** illustrate a system to enable crowdsourced labeling of training data for a machine learning model according to embodiments described herein.

**Figure 2** illustrates a system for receiving privatized crowdsourced labels from multiple client devices, according to an embodiment.

**Figure 3** is a block diagram of a system for generating privatizing proposed labels for server provided unlabeled data, according to an embodiment.

**Figures 4A-4B** illustrate systems to train machine learning models to generate proposed labels for unlabeled data, according to embodiments.

**Figures 5A-5C** illustrate exemplary privatized data encodings that can be used in embodiments described herein that implement privatization via differential privacy.

**Figures 6A-6B** are example process flows for encoding and differentially privatizing proposed labels to be transmitted to a server, according to embodiments described herein.

**Figures 7A-7D** are block diagrams of a multibit histogram and count-mean-sketch models of client and server algorithms according to an embodiment.

**Figures 8A-8B** illustrate logic to generate a proposed label on a client device, according to an embodiment.

**Figure 9** illustrates logic to enable a server to crowdsource labeling of unlabeled data, according to an embodiment.

**Figure 10** illustrates compute architecture on a client device that can be used to enable on-device, semi-supervised training and inferencing using machine learning algorithms, according to embodiments described herein.

**Figure 11** is a block diagram of mobile device architecture, according to an embodiment.

**Figure 12** is a block diagram illustrating an example computing system that can be used in conjunction with one or more of the embodiments of the disclosure.

DETAILED DESCRIPTION

Various embodiments and aspects will be described herein with reference to details discussed below. The accompanying drawings will illustrate the various embodiments. The following description and drawings are illustrative and are not to be construed as limiting. Numerous specific details are described to provide a thorough understanding of various embodiments. However, in certain instances, well-known or conventional details are not described to provide a concise discussion of embodiments.

Reference in the specification to "one embodiment" or "an embodiment" or "some embodiments" means that a particular feature, structure, or characteristic described in conjunction with the embodiment can be included in at least one embodiment. The appearances of the phrase "embodiment" in various places in the specification do not necessarily all refer to the same embodiment. It should be noted that there could be variations to the flow diagrams or the operations described therein without departing from the embodiments described herein. For instance, operations can be performed in parallel, simultaneously, or in a different order than illustrated.

The present disclosure recognizes that the use of personal information data, in the present technology, can be used to the benefit of users. For example, the personal information data can be used to deliver targeted content that is of greater interest to the user. Accordingly, use of such personal information data enables calculated control of the delivered content. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services. In another example, users can select not to provide location information for targeted content delivery services. In yet another example, users can select to not provide precise location information, but permit the transfer of location zone information.

A key roadblock in the implementation of many supervised learning techniques is the requirement to have labeled data on the training server. Existing solutions to the labeled data problem includes centralizing the training data and manually annotating the data with one or more labels. Where the training data is user data, maintaining such data on a server can risk a loss of user privacy. Additionally, manually labeling the training data may be cost prohibitive.

Embodiments described herein enable the labeling task for training data to be crowdsourced to a large number of client devices, such that labels for training data can be determined in a semi-supervised manner. The set of user data stored on the client devices can be leveraged to label training data without exposing the user data to the training server. Using a generative adversarial network (GAN) and a small number of labeled data samples provided by a server, client devices can perform semi-supervised learning based on user data stored in the client devices. Unlabeled units of training data can then be provided to the client devices. The trained model on the client devices can generate proposed labels for unlabeled units of training data provided by the server. The proposed labels provided by client devices are privatized to mask the relationship between the proposed label and the user and/or client device that proposed the label. The set of proposed labels can be analyzed on the server to determine the most popular proposed label for a unit of unlabeled data. Once each unit of data in a set of training data is labeled, the set of training data can then be used by the server to train an untrained machine learning model or improve the accuracy of a pre-trained model.

Labels provided by client devices can be privatized via one or more privatization mechanisms. In some embodiments, a differential privacy technique is applied to proposed label data on each client device before the proposed label data is provided to the server. Any differential privacy technique that can generate a histogram can be used. In one embodiment, a multibit histogram algorithm is used, although other histogram-based differential privacy algorithms can be used in other embodiments. In one embodiment, the server and client can also use a count-mean-sketch algorithm. In such embodiment, the server and client can switch from the multibit histogram algorithm to a count-mean-sketch algorithm when the universe of possible labels exceeds a threshold.

In addition to the use of differential privacy techniques, other techniques of maintaining user privacy can be applied. For example, some embodiments can implement privatization techniques including secure multi-party computation and/or homomorphic encryption operations. Secure multi-party computation enables multiple parties to jointly compute a function over their inputs while maintaining the privacy of the inputs. Homomorphic encryption is a form of encryption that allows computations to be carried out on ciphertext (encrypted data), thus generating an encrypted result which, when decrypted, matches the result of operations performed on the plaintext. In all embodiments, any crowdsourcing data provided by a user device is sanitized before transmission to the server. Additionally, user data that is to be transferred can be locally stored in a privatized manner.

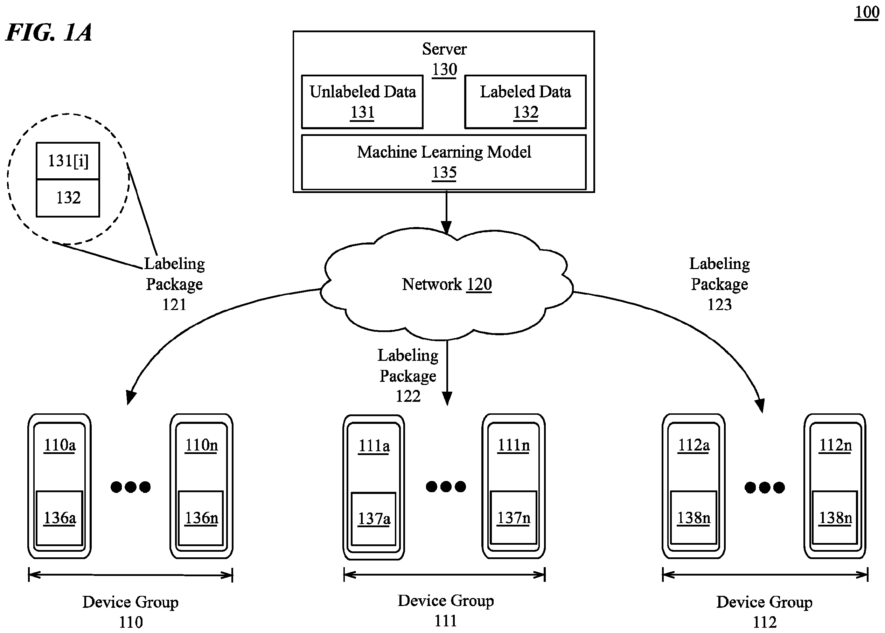

**Figures 1A-1B** illustrate a system 100 to enable crowdsourced labeling of training data for a machine learning model according to embodiments described herein. As shown in Figure 1A, in one embodiment, a server 130 can connect with a set of client devices 110a-110n, 111a-111n, 112a-112n over a network 120. The server 130 can be any kind of server, including an individual server or a cluster of servers. The server 130 can also be or include a cloud-based server, application server, backend server, virtual server, or combination thereof. The network 120 can be any suitable type of wired or wireless network such as a local area network (LAN), a wide area network (WAN), or combination thereof. Each of the client devices can include any type of computing device such as a desktop computer, a tablet computer, a smartphone, a television set top box, or other computing device. For example, a client device can be an iPhone®, Apple® Watch, Apple® TV, etc., and can be associated with a user within a large set of users to which tasks can be crowdsourced with the permission of the user.

In one embodiment, the server 130 stores a machine learning model 135, which can be a machine learning model based on a deep neural network. The machine learning model 135 can be a basic model that is an untrained model or a low accuracy pre-trained model. The server 130 can also store a set of unlabeled data 131 and a set of labeled data 132. In one embodiment, the unlabeled data 131 is a large set of data that will be labeled and used to increase the accuracy of the machine learning model 135. The labeled data 132 is a relatively smaller set of data that will be provided to the client devices to facilitate the generation of proposed labels for the unlabeled data.

In one embodiment, the unlabeled data 131 and labeled data 132 are of the same type of data, specifically the type of data for which the machine learning model 135 is to classify. However, the system 100 is not limited to any particular type of data. For example, the system 100 can be used for image data, including object and but are not limited to any specific type of data. For example, image data can be used for an image machine learning model, such as an image classifier, which can be configured for object recognition or facial recognition. The system 100 can also be configured to train a predictive system. A sequence of characters and words can be used to train a predictive model for a predictive keyboard. For example, the machine learning model 135 can be trained such that, for a given set of input characters, a next character or word can be predicted. A sequence of applications can be used to train an application predictor. For example, for a given sequence of applications accessed or used by a user, the machine learning model 135 can be trained to predict the next application or applications that are likely to be accessed by a user and present icons for those applications in an area of a user interface that is easily and readily accessible to the user. In one embodiment, a mapping application can use a variant of the machine learning model 135 to predict a navigation destination for a user based on a reset of recent locations or destinations for a user.

The client devices can be organized into device groups (e.g., device group 110, device group 111, device group 112) that can each contain multiple client devices. Each device group can contain n devices, where n can be any number of devices. For example, device group 110 can contain client device 110a-110n. Device group 111 can contain client device 111a-111n. Device group 112 can contain client device 112a-112n. In one embodiment, each device group can contain up to 128 devices, with the accuracy of the proposed labels generated by a device group increasing with the number of client devices in each group. The number of client devices in each device group is not limited to any specific number of devices. Additionally, the number of device groups is not limited to any specific number of groups. For each implementation of an embodiment, the number of devices in each device group can be the same for each group or can vary across groups. Additionally, it is not required for all devices within a group to provide a proposed label, although the server 130 may require a threshold number of devices within each group to propose a label before a specific one of the proposed labels is selected.

In one embodiment, each client device (client device 110a-110n, client device 111a-111n, client device 112a-112n) can include a local machine learning model. For example, client device 110a-110n of device group 110 can each contain corresponding local machine learning model 136a-136n. Client device 111a-111n of device group 111 can each contain corresponding local machine learning model 137a-137n. Client device 112a-112n of device group 112 can each contain a corresponding local machine learning model 138a-138n. In various embodiments, the local machine learning models can be loaded on each client device during factory provisioning or can be loaded or updated when a system image of the client device is updated. In one embodiment, each local machine learning model can initially be a variant of the machine learning model 135 of the server. The machine learning models can then be individualized to each client device by training on local data stored on the client device.

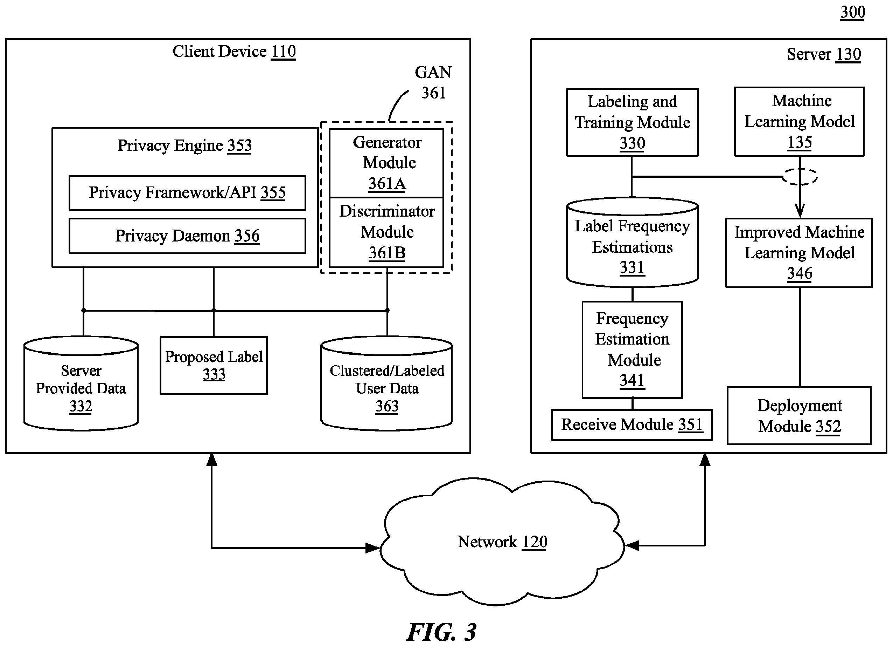

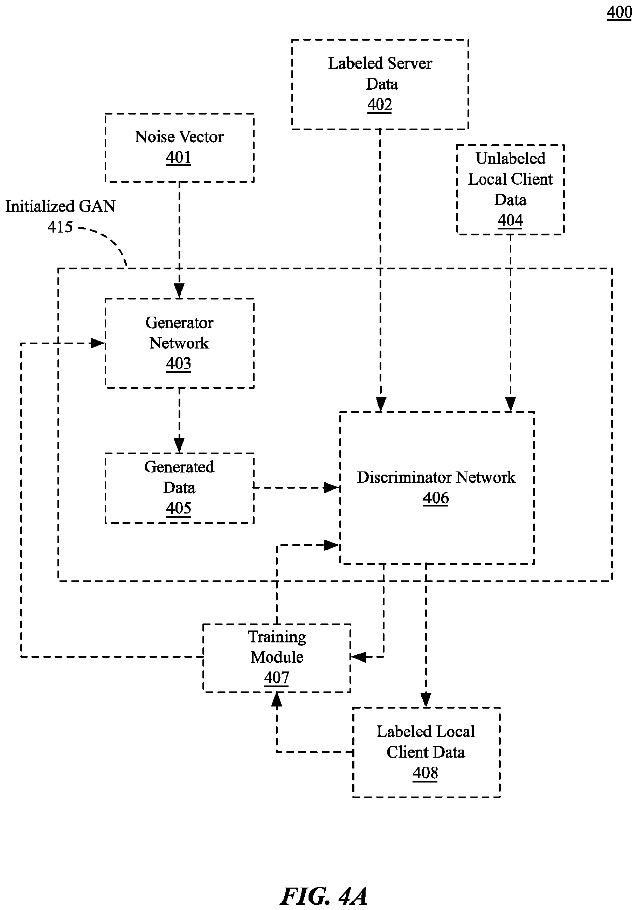

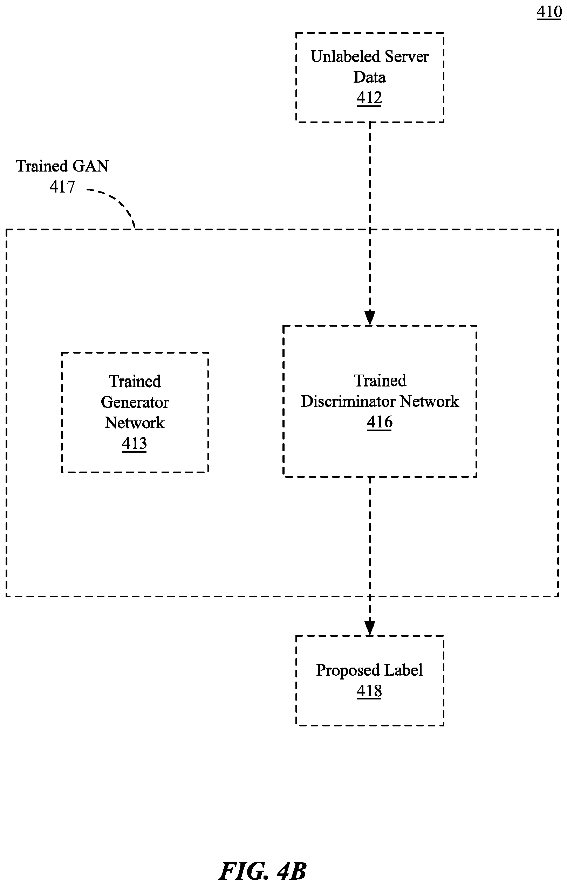

In one embodiment, the local machine learning models 136a-136n, 137a-137n, 138a-138n on each client device can be or include a variant of a generative adversarial network (GAN). A GAN is a machine learning network that includes a generator and a discriminator, where the generator maps a latent encoding to a data space and the discriminator distinguishes between samples generated by the generator and real data. The generator is trained to deceive the discriminator (e.g., to generate artificial data that is difficult to distinguish from real data). Discriminator is trained to avoid being deceived by the generator. The operations of the GAN are described further in Figures 3, 4A, and 4B.

The GAN on each device can be used to cluster or label locally stored data on each client device based on the set of labeled data 132 provided by the server. The server can provide a labeling package (e.g., labeling package 121, labeling package 122, labeling package 123) to each client device within each device group. The labeling packages can contain the set of labeled data 132 that will be used by a GAN on each device to cluster and/or label the local data on each device. The clustered or labeled data can be used to individualize the respective machine learning models. The labeling packages also include a unit of unlabeled data 131 [i] for which the client devices will generate proposed labels once the machine learning models are individualized. In one embodiment, the labeling package for each device group includes the same unit of unlabeled data, with each device group receiving a different unit of unlabeled data. For example, labeling package 121 provided to each client device 110a-110n in device group 110 can include a first unit of unlabeled data. Labeling package 122 provided to each client device 111a-111n in device group 111 can include a second unit of unlabeled data. Labeling package 123 provided to each client device 112a-112n in device group 112 can include a third unit of unlabeled data.

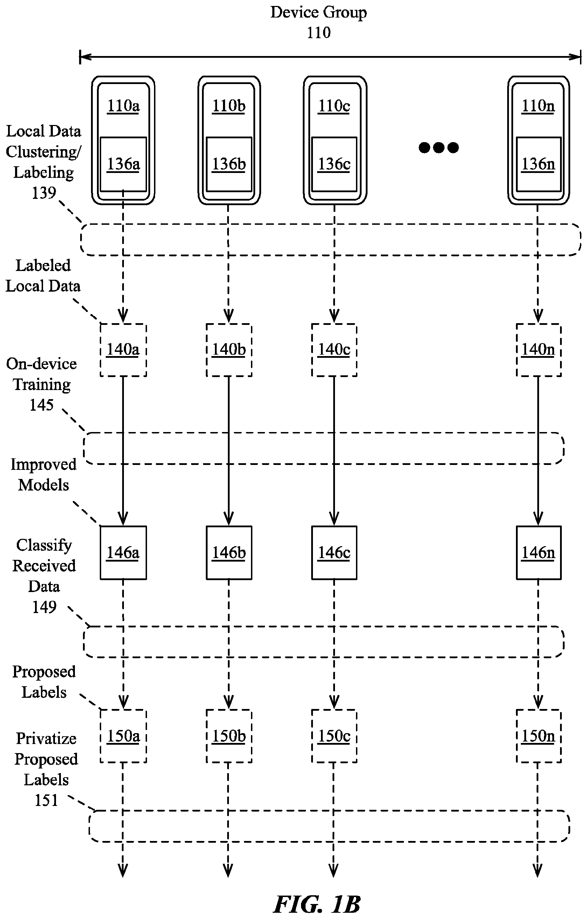

Figure 1B illustrates operations within a device group 110, according to embodiments described herein. The device group 110 includes client devices 110a-110n (e.g., client device 110a, client device 110b, client device 110c, through client device 110n). Each client device includes a corresponding machine learning model 136a-136n, where each machine learning model can be a part of or associated with a GAN.

In one embodiment, a local data clustering and/or labeling operation 139 is performed on each of the client devices 1 10a-110n within the device group 110 based on the labeling package (e.g., labeling package 121) provided by the server 130 in Figure 1A. The local data clustering and labeling operation 139 can enable local data on a client device, which is likely to be unlabeled, to be generally labeled or grouped in a manner that can be used to enhance, train, or individualize the local machine learning model 136a-136n on each client device 110a-110n. In various embodiments, various clustering and/or labeling techniques can be applied. In one embodiment, the machine learning model 136a-136n on each client device 110a-110n can analyze the set of locally stored data on each device and group the data according to common features present in the data. In the case of local image data stored in the device, the images can be clustered into groups of similar images based on common features detected in the images. For example, locally stored images containing faces can be clustered into a first group, while images containing vehicles can be clustered into a second group, and images containing landscapes can be clustered into a third group. The clustering can be performed without differentiation between individual faces, vehicles, landscapes, etc. within each group. In one embodiment, clustering is performed without regard to the types of groups being created. For example, the images containing faces can be grouped based on common features shared between the images without requiring the machine learning models to be explicitly configured or trained to recognize faces. Instead, images containing faces, or other objects, can be grouped based on common mathematical features detected within the images. Similar clustering can be performed for text data or other types of data based on mathematical features within the data files.

Once the user data is clustered, each client device 110a-10n can use the local machine learning model 136a-136n and a set of labeled data received from the server (e.g., labeled data 132 from server 130 of Figure 1A) to label the clustered user data. The client devices 110a-110n can compare sample units of labeled data from the set of labeled data to the data in the clusters of user data. The degree of commonality between the user data and the labeled data can vary depending on the data distribution of the user data, as the type and amount of user data stored in each client device can vary significantly between devices. Where a unit of data from the set of labeled data shares sufficient commonalty with a cluster of user data, each unit of data in the cluster can be assigned the label, resulting in a set of labeled local data 140a-140n on each client device.

The labeled local data 140a-140n on each client device 110a-110n can be used to perform an on-device training operation 145 to train or enhance the local machine learning model 136a-136n on each client device. The on-device training operation 145 can result in the generation of improved models 146a-146n on each device that are more accurate at performing machine learning inferencing operations on the specific type of data used to improve the model. Due to differences in the local data set of each client device 1 10a-110n (e.g., different images in local image libraries, different operating system or keyboard languages, different commonly used applications, etc.), the improved models 146a-146n will become individualized to each client device 110a-110n. In some implementations, individualization of the improved models 146a-146n may result in different levels of accuracy of each of the improved models. However, across the client devices 110a-110n within the device group 110, the proposed labels output by the device group 110, in the aggregate, can converge toward an accurate result.

In one embodiment, the client devices 110a-110n in the device group 110 can use the improved models 146a-146n on each device to perform an operation to classify received data 149. The received data is a unit of unlabeled data 131 (e.g., unlabeled data 131 [i]) from the server 130 that is provided to the device group 110 from the server via a labeling package (e.g., labeling package 121 for device group 110). The operation to classify the received data 149 can be performed on each client device 110a-110n to generate a set of proposed labels 150a-150n on each device. Each client device 11 0a-110n can then perform an operation to privatize the proposed labels 151 using one or more data privatization techniques described herein (e.g., differential privacy, homomorphic encryption, secure multiparty computation, etc.).

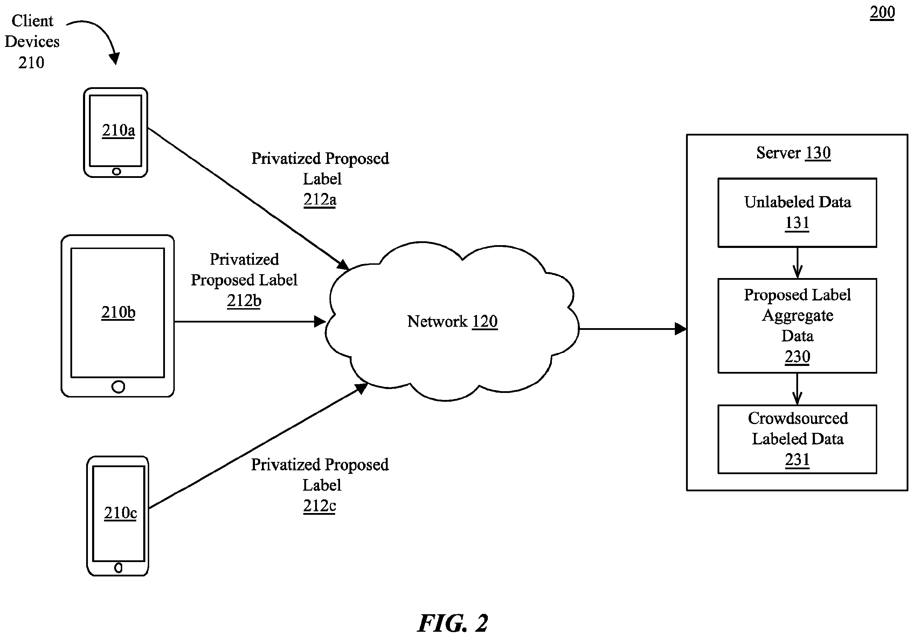

**Figure** 2 illustrates a system 200 for receiving privatized crowdsourced labels from multiple client devices, according to an embodiment. In one embodiment, the system 200 includes a set of client devices 210a-210c (collectively, 210), which can be any of the client devices described above (e.g., client devices 110a-110n, 111a-111n, 112a-112n). The client devices 210, using the techniques described above, can each generate a corresponding privatized proposed label 212a-212c (privatized proposed label 212a from client device 210, privatized proposed label 212b from client device 210b, privatized proposed label 212c from client device 210c) which each can be transmitted to the server 130 via the network 120.

The illustrated client devices 210 can be in the same device group or different device groups. For example, client device 210a can represent client device 110a of device group 110 in Figure 1A, while client device 210b can represent client device 11 1a of device group 111 in Figure 1A. Where the client devices 210 are in different device groups, the privatized proposed labels 212a-212c will each correspond with a different unit of unlabeled data provided by the server 130. For example, client device 210a can receive a first unit of unlabeled data in labeling package 121, while client device 210b can receive a second unit of unlabeled data in labeling package 122. Where the client devices 210 are in the same device group, the privatized proposed labels 212a-212c will correspond with the same unit of unlabeled data provided by the server (e.g., unlabeled data 131[i] in labeling package 121 of Figure 1A). Although the proposed labels are for the same unit of data, the labels proposed by the client devices 210 can differ, as the labels are proposed based on individualized machine learning models on each client device, where the individualized machine learning models are individualized based on the local data stored in each client device 210a-210c.

Prior to transmission to the server 130 over the network 120, the proposed labels generated on the client devices 210 are privatized to generate the privatized proposed labels 212a-212c. The privatization is performed to mask the identity of the contributor of any proposed label in the crowdsourced dataset and can be performed using one or more data privatization algorithms or techniques. Some embodiments described herein apply a differential privacy encoding to the proposed labels, while other embodiments can implement homomorphic encryption, secure multiparty compute, or other privatization techniques.

The server 130 maintains data store of proposed label aggregate data, which is an aggregation of the privatized proposed labels 212a-212c received from the client devices 210. The format of the proposed label aggregate data 230 can vary based on the privatization technique applied to the proposed labels. In one embodiment, a multibit histogram differential privacy technique is used to privatize the proposed labels and the proposed label aggregate data 230 is a histogram containing proposed label frequency estimates. The server can process the proposed label aggregate data 230 to determine a most frequently proposed label for each unit of unlabeled data 131 and label each unit, generating a set of crowdsourced labeled data 231. The crowdsourced labeled data 231 can then be used to train and enhance machine learning models.

**Figure 3** is a block diagram of a system 300 for generating privatizing proposed labels for server provided unlabeled data, according to an embodiment. In one embodiment, the client device 110 can include a privacy engine 353 that includes a privacy daemon 356 and a privacy framework or application programming interface (API) 355. The privacy engine 353 can use various tools, such as hash functions, including cryptographic hash functions, to privatize a proposed label 333 generated by the client device 110. The client device 110, in one embodiment, additionally includes a generative adversarial network (GAN 361) to perform semi-supervised learning using unlabeled data on the client device 110 and few selections of labeled data within server provided data 332 that is provided by the server 130. The GAN 361 includes a generator module 361A and a discriminator module 361B, which can each be neural networks, including deep convolutional neural networks. The GAN 361 can generate clustered or labeled user data 363 based on user data on the client device 110 and the samples of labeled data within the server provided data 332. In one embodiment, the discriminator module 361B of the trained GAN 361 can then generate a proposed label 333 for a unit of unlabeled data (e.g., unlabeled data 131[i] as in Figure 1A) within the server provided data 332. The proposed label 333 can then be privatized by the privacy daemon 356 within the privacy engine 353 using a privacy framework or API 355. The privatized proposed label can then be transmitted to the server 130 via the network 120.

The server 130 can include a receive module 351, and a frequency estimation module 341 to determine label frequency estimations 331, which can be stored in various data structures, such as an array as in the multibit histogram algorithm. The receive module 351 can asynchronously receive crowdsourced privatized labels of from a large plurality of client devices 110. In one embodiment, the receive module 351 can remove latent identifiers from the received sketch data. Latent identifiers can include IP addresses, metadata, session identifiers, or other data that might identify the particular client device 110 that sent the sketch. The frequency estimation module 341 can also process received privatized proposed labels using operations such as, but not limited to a privatized count-mean-sketch operation. The label frequency estimations 331 can be analyzed by a labeling and training module 330, which can determine labels for unlabeled server data by applying a highest frequency label received for each unit of unlabeled server data. The labeling and training module 330 can use the determined labels to train an existing server-side machine learning model 135 into an improved server-side machine learning model 346. In one embodiment, the client device 110 and the server 130 can engage in an iterative process to enhance the accuracy of a machine learning model. For example, the improved machine learning model 346 can be deployed to the client device 110 via a deployment module 352, where portions of the improved machine learning model 346 can be incorporated into the GAN 361 on the client device 110, to generate refined label data to further improve the server side model.

Figures 4A-4B illustrate systems 400, 410 to train machine learning models to generate proposed labels for unlabeled data, according to embodiments. Figure 4A illustrates a system 400 to train an initialized GAN 415 using unlabeled local client data 404 and a small amount of labeled data provided by the server (e.g., labeled server data 402). Figure 4B illustrates a system 410 in which a trained GAN 417 is used to generate a proposed label 418 for a unit of unlabeled server data 412. The systems 400, 410 can be implemented on a client device as described herein, such as, but not limited to the client devices 210 of Figure 2. The initialized GAN 415 and trained GAN 417 can each represent instances of the GAN 361 of Figure 3 before and after on-device semi-supervised learning is performed on the client device 110.

The system 400 of Figure 4A includes an initialized GAN 415 that includes a generator network 403 and a discriminator network 406. In one embodiment, the generator network 403 is a generative neural network including fully-connected, convolutional, strided convolutional and/or deconvolutional layers. The specific implementation of the generator network 403 can vary based on the GAN implementation, and different implementations can use different numbers and combinations of neural network layers. The generator network 403 is configured to transform random input data (e.g., noise vector 401) into generated data 405. The discriminator network 406 is trained to distinguish between generated data 405 output by the generator network 403 and actual data within a dataset. The generator network 403 and the discriminator network 406 are trained together.

During training, the generator network 403 learns to generate more authentic generated data 405 based on feedback from the discriminator network 406. Initial versions of the generated data 405 resemble random noise, while subsequent iterations of the generated data, during training, begin to resemble authentic data. During training, the discriminator network 406 learns to distinguish between authentic data and generated data 405. Training the initialized GAN 415 improves the accuracy of each network; such that the discriminator network learns how to accurately discriminate between generated data 405 and authentic data, while the generator network 403 learns how to produce generated data 405 that the discriminator network 406 may inaccurately interpret as genuine data.

In the illustrated system 400, the authentic data set used to train the initialized GAN 415 includes labeled server data 402 and unlabeled local client data 404 on a client device. The training process of the GAN 415 includes finding the parameters of the discriminator network 406 that maximize classification accuracy, while finding the parameters of a generator which maximally confuse the discriminator. The generator network 403 and the discriminator network 406 can each interact with a training module 407 that directs the training path of each network. The training module 407 can provide feedback to the generator network 403 and the discriminator network 406 regarding the output of each network. For example, when the discriminator network 406 correctly identifies generated data 405 as synthetic, the training module 407 can provide information to the generator network 403 to enable the network to generate more authentic generated data 405. When the discriminator network 406 incorrectly identifies generated data 405 as authentic, then training module 407 can provide information to the discriminator network 406 to enable the network to better distinguish between authentic data and the generated data 405.

In one embodiment, the training module 407 can be configured to enable semi-supervised learning for the initialized GAN 415 using the unlabeled local client data 404 in conjunction with the labeled server data 402. Semi-supervised training enables machine learning to be performed when only a subset of the training data set has corresponding classification labels. In one embodiment, during the semi-supervised training process the training module 407 can enable the initialized GAN 415 to output labeled local client data 408, which includes clusters of previously unlabeled local client data 404 with coarse grained labels applied based on samples within the labeled server data 402. In some embodiments, successive rounds of training can be performed using the labeled local client data 408 to boost the accuracy of the discriminator network 406. In such embodiments, the training module 407 can prioritize the optimization of the accuracy of the discriminator network 406, potentially at the expense of the accuracy of the generator network 403 at generating authentic appearing generated data 405.

The system 410 of Figure 4B includes the trained GAN 417, which includes a trained generator network 413 and a trained discriminator network 416. The trained GAN 417 is trained in a semi-supervised manner as described in Figure 4A, such that the trained discriminator network 416 is trained to be able to generate a proposed label 418 for a unit of unlabeled server data 412 with an accuracy of at least slightly better than uniformly guessing at random. The required accuracy of any given proposed label is reduced by aggregating, at the server, a large plurality (e.g., over 100) of proposed labels for each unit of unlabeled server data 412. The proposed labels are privatized before transmission to the server. The server then processes the aggregate proposed label data according to a server-side algorithm associated with the privatization technique used to privatize the proposed label 418.

Proposed Label privatization via Differential Privacy.

In some embodiments, one or more differential privacy techniques are applied to the crowdsourced proposed labels to mask the identity of contributors of the proposed labels. As a general overview, local differential privacy introduces randomness to client user data prior to sharing the user data. Instead of having a centralized data source D = $\{d_1, ..., d_n\}$, each data entry $d_i$ belongs to a separate client i. Given the transcript $T_i$ of the interaction with client i, it is may not be possible for an adversary to distinguish $T_i$ from the transcript that would have been generated if the data element were to be replaced by null. The degree of indistinguishability (e.g., degree of privacy) is parameterized by $\varepsilon$, which is a privacy parameter that represents a tradeoff between the strength of the privacy guarantee and the accuracy of the published results. Typically, $\varepsilon$ is considered to be a small constant. In some embodiments, the $\varepsilon$ value can vary based on the type of data to be privatized, with more sensitive data being privatized to a higher degree. The following is a formal definition of local differential privacy.

Let n be the number of clients in a client-server system, let $\Gamma$ be the set of all possible transcripts generated from any single client-server interaction, and let $T_i$ be the transcript generated by a differential privacy algorithm A while interacting with client i. Let $d_i \in S$ be the data element for client i. Algorithm A is $\varepsilon$-locally differentially private if, for all subsets $T \subseteq \Gamma$, the following holds:

$$\forall i \in [n], d \in S, \ \left| \ln \frac{\Pr[T_i \in T \mid d_i = d]}{\Pr[T_i \in T \mid d_i = \text{null}]} \right| \leq \varepsilon.$$

Here, $d_i$ = null refers to the case where the data element for client i is removed. In other words, an adversary having n - 1 data points of a data set cannot reliably test whether the n-th data point was a particular value. Thus, a differentially privatized dataset cannot be queried in a manner that enables the determination of any particular user's data.

In one embodiment, a privatized multibit histogram model can be implemented on the client device and the server, with an optional transition to a count-mean-sketch privatization technique when the universe of labels exceeds a threshold. The multibit histogram model can send *p* bits to a server, where *p* corresponds to size of the universe of data values corresponding with potential proposed labels. The server can perform a summation operation to determine a frequency of user data values. The multibit histogram model can provide an estimated frequency variance of

$(c_\varepsilon^2 - 1)/4)n,$ where n is the number of users and $c_\varepsilon = \frac{e^\varepsilon + 1}{e^\varepsilon - 1}.$ When the universe of data values corresponding with potential proposed labels exceeds a threshold, the server can use a count-mean-sketch differential privacy mechanism to estimate the frequency of proposed labels in a privatized manner.

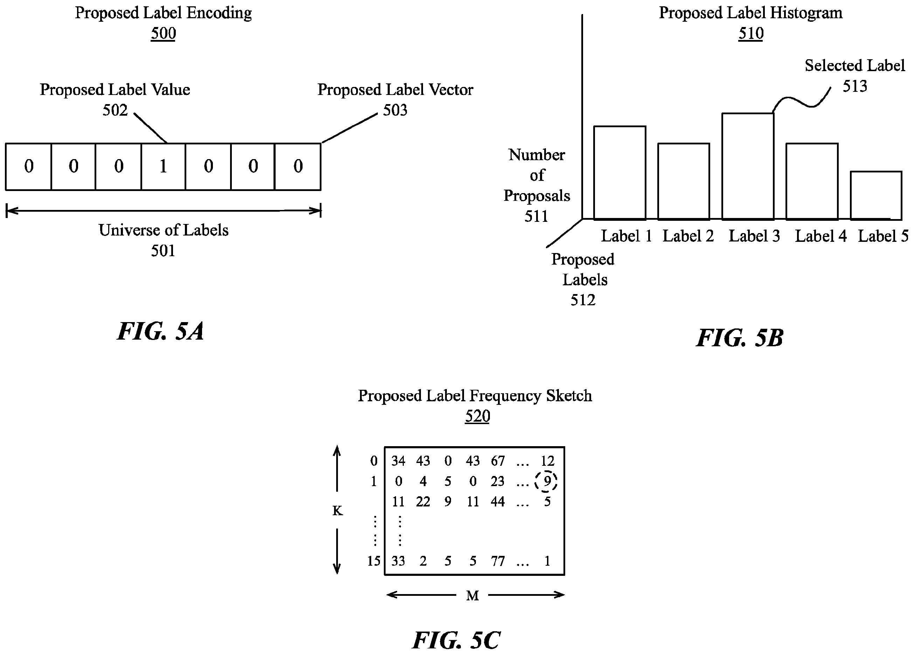

**Figures 5A-5C** illustrate exemplary privatized data encodings that can be used in embodiments described herein that implement privatization via differential privacy. Figure 5A illustrates proposed label encoding 500 on a client device. Figure 5B illustrates a proposed label histogram 510 on a server. Figure 5C illustrates a server-side proposed label frequency sketch 520.

As shown in Figure 5A, in one embodiment a proposed label encoding 500 is created on a client device in which a proposed label value 502 is encoded into a proposed label vector 503. The proposed label vector 503 is a one-hot encoding in which a bit is set that corresponds with a value associated with a proposed label generated by a client device. In the illustrated proposed label encoding 500, the universe of labels 501 is the set of possible labels that can be proposed for an unlabeled unit of data provided to a client device by the server. The number of values in the universe of labels 501 is related to the machine-learning model that will be trained by the crowdsourced labeled data. For example, for a classifier that will be trained to infer a classification selected from a universe of *p* classifications, a universe size of *p* can be used for the universe of labels. However, such relationship is not required for all embodiments, and the size of the universe of labels is not fixed to any specific size. It should be noted that a vector is described herein for convenience and mathematical purposes, but any suitable data structure can be implemented, such as a string of bits, an object, etc.

As shown in Figure 5B, in one embodiment the server can aggregate privatized proposed labels into a proposed label histogram 510. For each unit of unlabeled data, the server can aggregate the proposed labels 512 and count the number of proposals 511 for each of the proposed labels 512. The selected label 513 will be the proposed label with the greatest number of proposals 511.

As shown in Figure 5C, in one embodiment the server can generate a proposed label frequency sketch 520 for use with a count-mean-sketch differential privacy algorithm. The server can accumulate privatized proposed labels from multiple different client devices. Each client device can transmit a privatized encoding of a proposed label along with an index value (or a reference to the index value) of a random variant used when privatizing the proposed label. The random variant is a randomly selected variation on a proposed label to be privatized. Variants can correspond to a set of k values (or k index values) that are known to the server. The accumulated proposed labels can be processed by the server to generate the proposed label frequency sketch 520. The frequency table can be indexed by the set of possible variant index values k. A row of the frequency table corresponding to the index value of the randomly selected variant is then updated with the privatized vector. More detailed operations of the multi-bit histogram and count-mean-sketch methods are further described below.

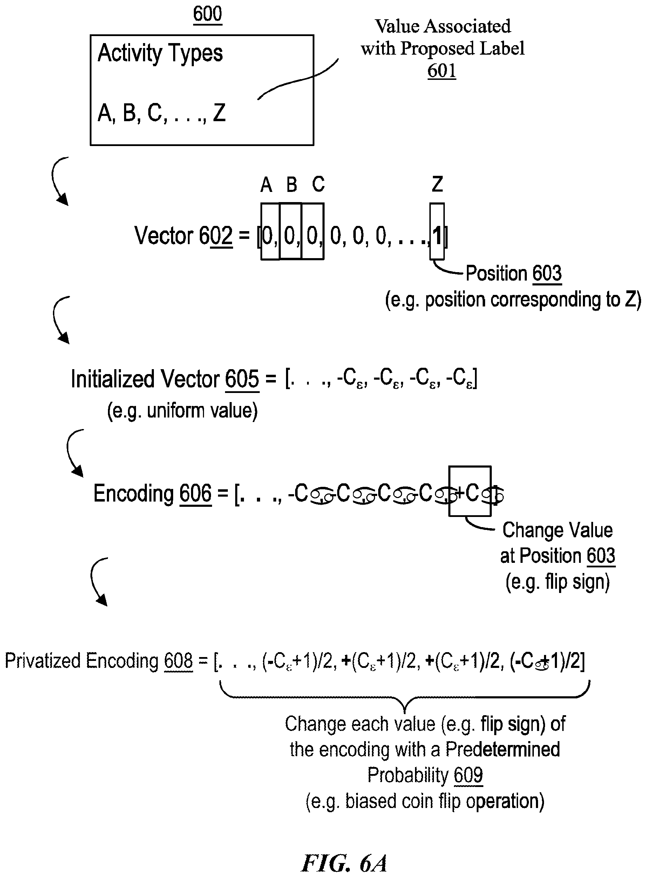

**Figures 6A-6B** are example processes 600, 610, 620 for encoding and differentially privatizing proposed labels to be transmitted to a server, according to embodiments described herein. In embodiments described herein, each client device that participates in crowdsourcing a label for a unit of server provided data can generate a proposed label for the unit of data and privatized the label before transmitting the label to the server. The proposed label can be a label within a universe of potential proposed labels, where a specific label value is associated with a proposed label selected by the client device.

In one embodiment, as shown in example process flow 600 of Figure 6A, a specific label value 601 is associated with a proposed label selected by the client device. The system can encode the label value 601 in the form of a vector 602, where each position of the vector corresponds with a proposed label. The label value 601 can correspond to a vector or bit position 603. For example, illustrated proposed label value G corresponds to position 603 while potential proposed label values A and B correspond to different positions within the vector 602. The vector 602 can be encoded by updating the value (e.g., setting the bit to 1) at position 603. To account for any potential bias of a 0 or null value, the system may use an initialized vector 605. In one embodiment, the initialized vector 605 can be a vector $v \leftarrow \{-c_\varepsilon\}^m$. It should be noted that the values are used as mathematical terms, but can be encoded using bits (e.g., $0 = +c_\varepsilon$, $1 = -c_\varepsilon$). Accordingly, vector 602 may use the initialized vector 605 to create an encoding 606 wherein the value (or bit) at position 603 is changed (or updated). For example, the sign of the value at position 603 can be flipped such that the value is $c_\varepsilon$ (or $+c_\varepsilon$) and all other values remain $-c_\varepsilon$ as shown (or vice versa).

The client device can then create a privatized encoding 608 by changing at least some of the values with a predetermined probability 609. In one embodiment, the system may flip the sign (e.g., (-) to (+), or vice versa) of a value with the predetermined probability 609. As further described herein, the predetermined probability may be $1 / (1 + e^\varepsilon)$.

Accordingly, the label value 601 is now represented as a privatized encoding 608, which individually maintains the privacy of the user that generated the proposed label. This privatized encoding 609 can be stored on the client device and subsequently transmitted to the server 130. The server 130 can accumulate privatized encodings (e.g., vectors) from various client devices. The accumulated encodings may then be processed by the server for frequency estimation. In one embodiment, the server may perform a summation operation to determine a sum of the value of user data. In one embodiment, summation operation includes performing a summation operation from all of the vectors received by the client devices.

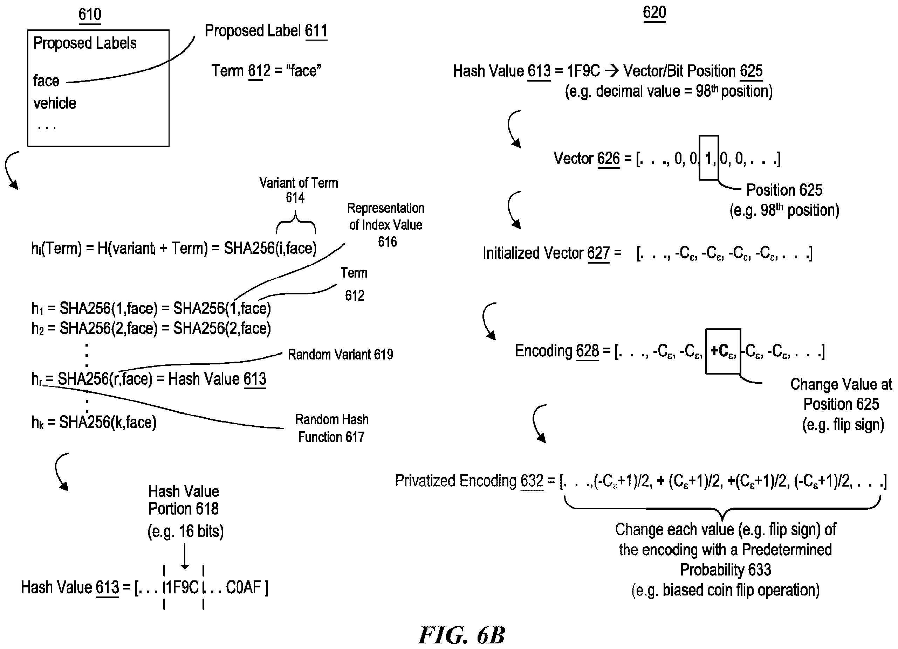

In one embodiment, as shown in example process 610 of Figure 6B, is an example process flow of differentially privatizing an encoding of user data to be transmitted to a server according to an embodiment of the disclosure. A client device can select a proposed label 611 to transmitted to the server. The proposed label 611 can be represented as a term 612 in any suitable format, where the term is a representation of the proposed label. In one embodiment, the term 612 can be converted to a numeric value using a hash function. As illustrated, a SHA256 hash function is used in one embodiment. However, any other hash function may also be used. For example, variants of SHA or other algorithms may be used such as SHA1, SHA2, SHA3, MD5, Blake2, etc. with various bit sizes. Accordingly, any hash function may be used in implementations given they are known to both the client and server. In one embodiment, a block cipher or another cryptographic function that is known to the client and server can also be used.

In one embodiment, computational logic on a client device can use a portion of a created hash value along with a variant 614 of the term 612 to address potential hash collisions when performing a frequency count by the server, which increases computational efficiency while maintaining a provable level of privacy. Variants 614 can correspond to a set of k values (or k index values) that are known to the server. In one embodiment, to create a variant 614, the system can append a representation of an index value 616 to the term 612. As shown in this example, an integer corresponding to the index value (e.g., "1,") may be appended to the term 612 to create a variant (e.g., "1,face", or "face1", etc.). The system can then randomly select a variant 619 (e.g., variant at random index value r). Thus, the system can generate a random hash function 617 by using a variant 614 (e.g., random variant 309) of the term 612. The use of variants enables the creation of a family of k hash functions. This family of hash functions is known to the server and the system can use the randomly selected hash function 617 to create a hash value 613. In one embodiment, in order to reduce computations, the system may only create the hash value 613 of the randomly selected variant 619. Alternatively, the system may create a complete set of hash values (e.g., k hash values), or hash values up to the randomly selected variant r. It should be noted that a sequence of integers is shown as an example of index values, but other forms of representations (e.g., various number of character values) or functions (e.g., another hash function) may also be used as index values given that they are known to both the client and server.

Once a hash value 613 is generated, the system may select a portion 618 of the hash value 613. In this example, a 16-bit portion may be selected, although other sizes are also contemplated based on a desired level of accuracy or computational cost of the differential privacy algorithm (e.g., 8, 16, 32, 64, etc. number of bits). For example, increasing the number of bits (or m) increases the computational (and transmission) costs, but an improvement in accuracy may be gained. For instance, using 16 bits provides $2^{16}$-1 (e.g., approximately 65k) potential unique values (or m range of values). Similarly, increasing the value of the variants k, increases the computational costs (e.g., cost to compute a sketch), but in turn increases the accuracy of estimations. In one embodiment, the system can encode the value into a vector, as in Figure 6A, where each position of the vector can correspond to a potential numerical value of the created hash 613.

For example, process flow 620 of Figure 6B illustrates that the created hash value 613, as a decimal number, can be correspond to a vector/bit position 625. Accordingly, a vector 626 may be encoded by updating the value (e.g., setting the bit to 1) at position 625. To account for any potential bias of a 0 or null value, the system may use an initialized vector 627. In one embodiment, the initialized vector 627 may be a vector $v \leftarrow \{-c_\varepsilon\}^m$. It should be noted that the values are used as mathematical terms, but may be encoded using bits (e.g., 0 = $+c_\varepsilon$, 1 = $-c_\varepsilon$). Accordingly, vector 626 may use the initialized vector 627 to create an encoding 628 wherein the value (or bit) at position 625 is changed (or updated). For example, the sign of the value at position 625 may be flipped such that the value is $c_\varepsilon$ (or $+ c_\varepsilon$) and all other values remain $-c_\varepsilon$ as shown (or vice versa).

The system can then create a privatized encoding 632 by changing at least some of the values with a predetermined probability 633. In one embodiment, the system can flip the sign (e.g., (-) to (+), or vice versa) of a value with the predetermined probability 633. As further described herein, in one embodiment the predetermined probability is 1 / (1+ $e^\varepsilon$). Accordingly, the proposed label 611 is now represented as a privatized encoding 632, which individually maintains the privacy of the user when the privatized encoding 632 of the proposed label 611 is aggregated by the server.

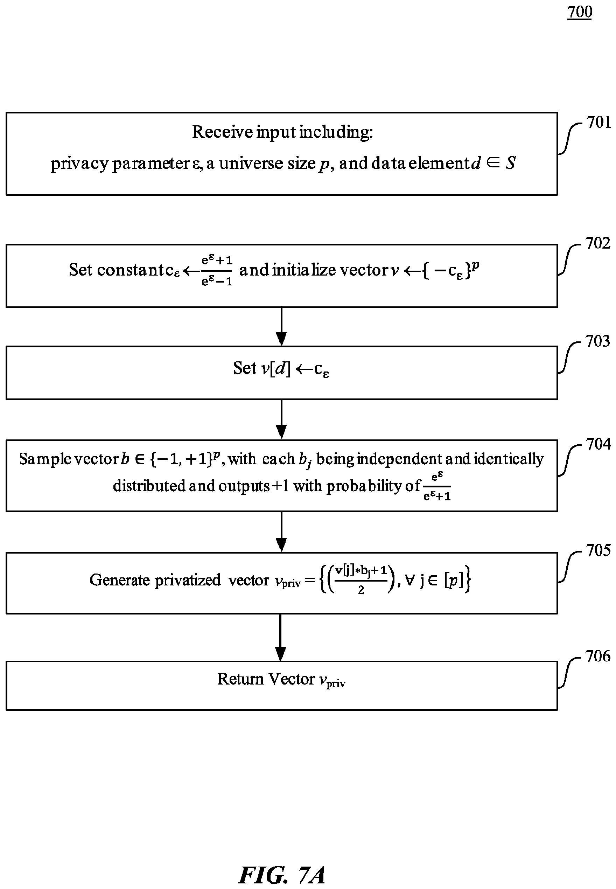

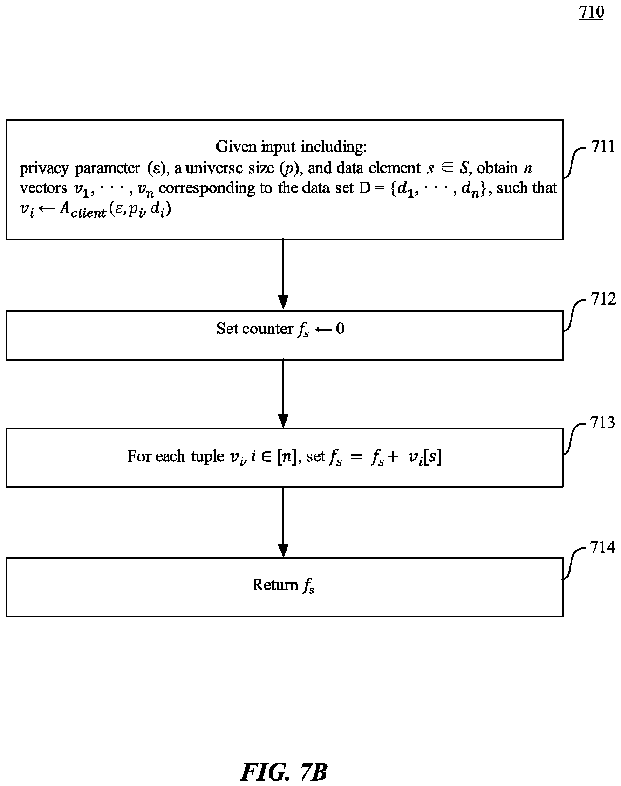

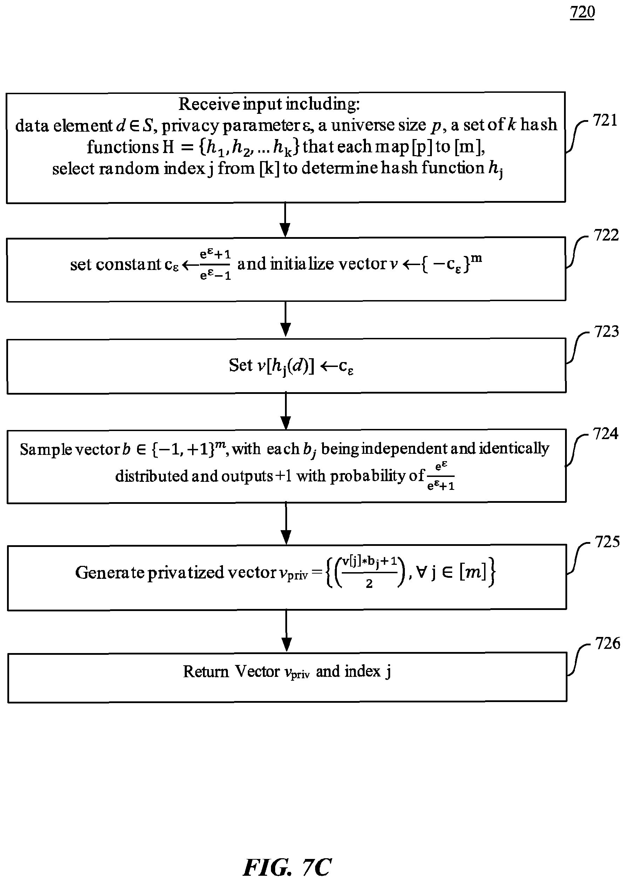

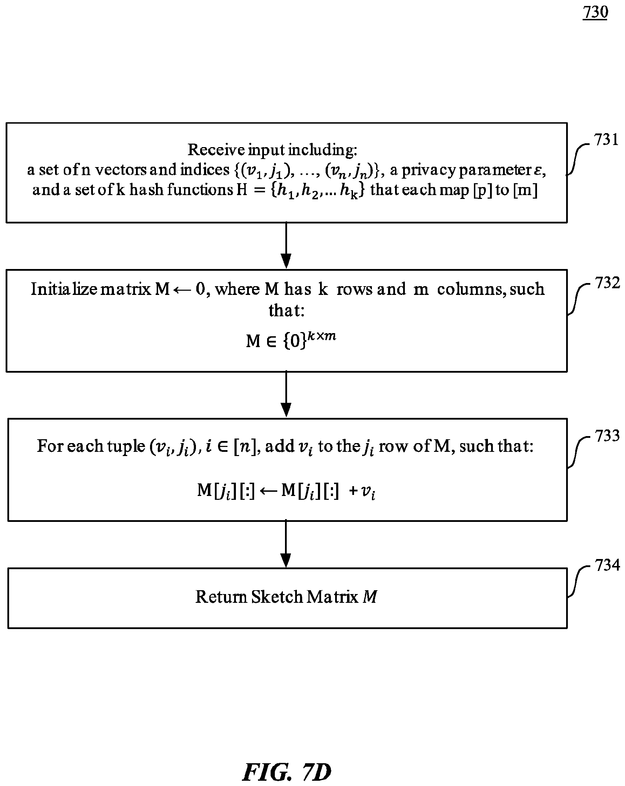

**Figures 7A-7D** are block diagrams of multibit histogram and count-mean-sketch models of client and server algorithms according to an embodiment. Figure 7A shows an algorithmic representation of the client-side process 700 of the multibit histogram model as described herein. Figure 7B shows an algorithmic representation of the server-side process 710 of the multibit histogram model as described herein. Figure 7C shows an algorithmic representation of a client-side process 720 of a count-mean-sketch model as described herein. Figure 7D shows an algorithmic representation of a server-side process 730 of a count-mean-sketch model as described herein. The client-side process 700 and server-side process 710 can use the multibit histogram model to enable privacy of crowdsourced data while maintaining the utility of the data. Client-side process 700 can initialize vector $v \leftarrow \{-c_\varepsilon\}^m$. Where the user is to transmit $d \in [p]$, client-side process 700 can be applied to flip the sign of $v[h(d)]$, where $h$ is a random hash function. To ensure differential privacy, client-side process 700 can flip the sign of each entry $v$ with a probability of $1 / (1+ e^\varepsilon)$. The client-side process 720 can also use hash functions to compress frequency data for when the universe of proposed labels exceeds a threshold.

As shown Figure 7A, client-side process 700 can receive input including a privacy parameter $\varepsilon$, a universe size $p,$ and data element $d \in S$, as shown at block 701. At block 702, client-side process 700 can set a constant $c_\varepsilon \leftarrow \dfrac{e^\varepsilon + 1}{e^\varepsilon - 1}$ and initialize vector $v \leftarrow \{-c_\varepsilon\}^p$, as shown in block 702. Constant $c_\varepsilon$ allows noise added to maintain privacy and remain unbiased. Added noise should be large enough to mask individual items of user data, but small enough to allow any patterns in the dataset to appear. As shown at block 703 client-side process 700 can then set $v[d] \leftarrow c_\varepsilon$ and, at block 704, sample vector $b \in \{-1, +1\}^p$, with each $b_j$ being independent and identically distributed and outputs +1 with probability $\dfrac{e^\varepsilon}{e^\varepsilon + 1}$. As shown at block 705, client-side algorithm 700 can then generate a privatized vector $v_{\mathrm{priv}} = \left\{ \left(\dfrac{v[j] * b_j + 1}{2}\right), \forall j \in [p] \right\}$. At block 706, client-side algorithm 700 can return vector $v_{\mathrm{priv}}$, which is a privatized version of vector $v$.

As shown in Figure 7B, server-side process 710 aggregates the client-side vectors and, given input including privacy parameter $\varepsilon$, universe size $p$, and data element $s \in S$, whose frequency is to be estimated, can return an estimated frequency based on aggregated data received from crowdsourcing client devices. As shown at block 711, server-side process 710 (e.g., $A_{server}$), given privacy parameter $\varepsilon$ and a universe size $p,$ can obtain $n$ vectors $v_1, \cdots, v_n$, corresponding to the data set $D = \{d_1, \cdots, d_n\}$, such that $v_i \leftarrow A_{client}$ $(\varepsilon, p, d_i)$. At block 712, server-side process 710 can initialize a counter $f_s$ (e.g., $f_s \leftarrow 0$). Server-side process 710, for each tuple $v_i$, $i \in [n]$, can set $f_s = f_s + v_i[s]$, as shown at block 713. At block 714, server-side process 710 can return $f_s$, which is a frequency of the value of user data amongst the aggregate data set.

Client-side process 700 and server-side process 710 provide privacy and utility. Client-side process 700 and server-side process 710 are jointly locally differentially private. Client-side process 700 is $\varepsilon$-locally differentially private and server-side process 710 does not access raw data. For arbitrary output $v \in \{-c_\varepsilon, c_\varepsilon\}^p$, the probability of observing the output is similar whether the user is present or not. For example, in the case of an absent user, the output of $A_{client}$ $(\varepsilon, p, h, \varphi)$ can be considered, where $\varphi$ is the null element. By the independence of each bit flip,

$$\frac{\Pr[A_{client}(\varepsilon, p, h, d) = v]}{\Pr[A_{client}(\varepsilon, p, h, \varphi) = v]} \leq e^\varepsilon$$

Similarly,

$$\frac{\Pr[A_{client}(\varepsilon, p, h, d) = v]}{\Pr[A_{client}(\varepsilon, p, h, \varphi) = v]} \geq e^{-\varepsilon}$$

Server-side process 710 also has a utility guarantee for frequency estimation. Privacy and utility are generally tradeoffs for differential privacy algorithms. For a differential privacy algorithm to achieve maximal privacy, the output of the algorithm may not be a useful approximation of the actual data. For the algorithm to achieve maximal utility, the output may not be sufficiently private. The multibit histogram model described herein achieves $\varepsilon$-local differential privacy while achieving optimal utility asymptotically.

The utility guarantee for server-side process 710 be stated as follows: Let $\varepsilon > 0$ and $s \in S$ be an arbitrary element in the universe. Let $f_s$ be the output of server-side process 710 (e.g., $A_{server}(\varepsilon, p, s)$) and $X_s$ be the true frequency of $s$. Then, for any $b > 0$,

$$\Pr\left[ |f_s - X_s| > |b\sigma\sqrt{n}| \right] < 1 - erf\left( b/\sqrt{2} \right) + \frac{1.12 \cdot \rho}{\sigma^3 \sqrt{n}},$$

$$c_{\varepsilon} = \frac{e^{\varepsilon}+1}{e^{\varepsilon}-1}, \sigma = \sqrt{\frac{c_{\varepsilon}^2-1}{4}}, \rho = \frac{c_{\varepsilon}^3-1/c_{\varepsilon}}{8}.$$

where $\quad$ and

The overall concepts for the count-mean-sketch algorithm are similar to those of multi-bit histogram, excepting that data to be transferred is compressed when the universe size p becomes very large. The server can use a sketch matrix M of dimension k x m to aggregate the privatized data.

As shown Figure 7C, a client-side process 720 can receive input including a data element $d \in S$, a privacy parameter $\varepsilon$, a universe size *p*, and a set of *k* hash functions H = {$h_1$, $h_2$, ... $h_k$} that each map [p] to [m], can select random index j from [k] to determine hash function $h_j$, as shown at block 721. Client-side process 720 can then set a

constant $\quad c_{\varepsilon} \leftarrow \dfrac{e^{\varepsilon}+1}{e^{\varepsilon}-1} \quad$ and initialize vector v ← {-$c_{\varepsilon}$}$^m$, as shown in block 722. Constant $c_{\varepsilon}$ allows noise added to maintain privacy and remain unbiased. Added noise should be large enough to mask individual items of user data, but small enough to allow any patterns in the dataset to appear.

As shown at block 723 client-side process 720 can use randomly selected hash function $h_j$ to set $v[h_j(d)] \leftarrow c_{\varepsilon}$. At block 724, client-side process 720 can sample vector $b \in \{-1, +1\}^m$, with each $b_j$ being independent and identically distributed and outputs +1 with probability $\dfrac{e^{\varepsilon}}{e^{\varepsilon}+1}$. As shown at block 725, client-side algorithm 720 can then generate

a privatized vector $\quad v_{\text{priv}} = \left\{ \left( \dfrac{v[j]*b_j+1}{2} \right), \forall j \in [m] \right\}.$ At block 726, client-side algorithm 720 can return vector $v_{\text{priv}}$, which is a privatized version of vector v, and randomly selected index j.

As shown in Figure 7D, a server-side process 730 can aggregate client-side vectors and from client-side process 720. Server-side process 730 can receive input including a set of n vectors and indices {($v_1,j_1$), ..., ($v_n,j_n$)}, a privacy parameter $\varepsilon$, and a set of k hash functions H = {$h_1$, $h_2$, ... $h_k$} that each map [p] to [m], as shown at block 731. Server-side process 730 can then initialize matrix M ← 0, where M has k rows and m columns, such that M $\in$ {0}$^{k \times m}$, as shown at block 732. As shown at block 733, for each tuple ($v_i,j_i$), $i \in [n]$, server-side process 730 can add $v_i$ to the $j_i$ row of M, such that M[$j_i$][:] ← M[$j_i$][:] + $v_i$. At block 734, the server-side process 730 can return sketch matrix *M*. Given the sketch matrix M, it is possible to estimate the count for entry $d \in S$ by de-biasing the counts and averaging over the corresponding hash entries in M.

While specific examples of proposed label privatization via multibit histogram and/or count-mean-sketch differential privacy techniques are described above, embodiments are not limited to differential privacy algorithms for implementing privacy of the crowdsourced labels. As described herein, homomorphic encryption techniques can be applied, such that encrypted values received from client devices can be summed on the server without revealing the privatized data to the server. For example, the client devices can employ a homomorphic encryption algorithm to encrypt proposed labels and send the proposed labels to the server. The server can then perform a homomorphic addition operation to sum the encrypted proposed labels without requiring the knowledge of the unencrypted proposed labels. In one embodiment, secure multi-party computation techniques can also be applied, such that the client device and the server can jointly compute aggregated values for the proposed labels without exposing the user data directly to the sever.

Process Logic for Crowdsourcing Proposed Labels

Embodiments described herein provide logic that can be implemented on a client device and a server device as described herein to enable a server to crowdsource the generation of labels for training data. The crowdsourced labels can be generated across an array of client devices that can use a semi-supervised training technique to train a local generative adversarial network to propose labels for units of data provided by the server. The semi-supervised learning is performed using local user data stored on or accessible to the client device, as well as a sample of labeled data provided by the server. The systems described herein can enable crowdsourced labeling for various types of data including, but not limited to image data, text data, application access sequences, location sequences, and other types of data that can be used to train classifiers and/or predictors, such as image classifiers, text data classifiers, and text predictors. The trained classifiers and predictors can be used to enhance user experience when operating a computing device.

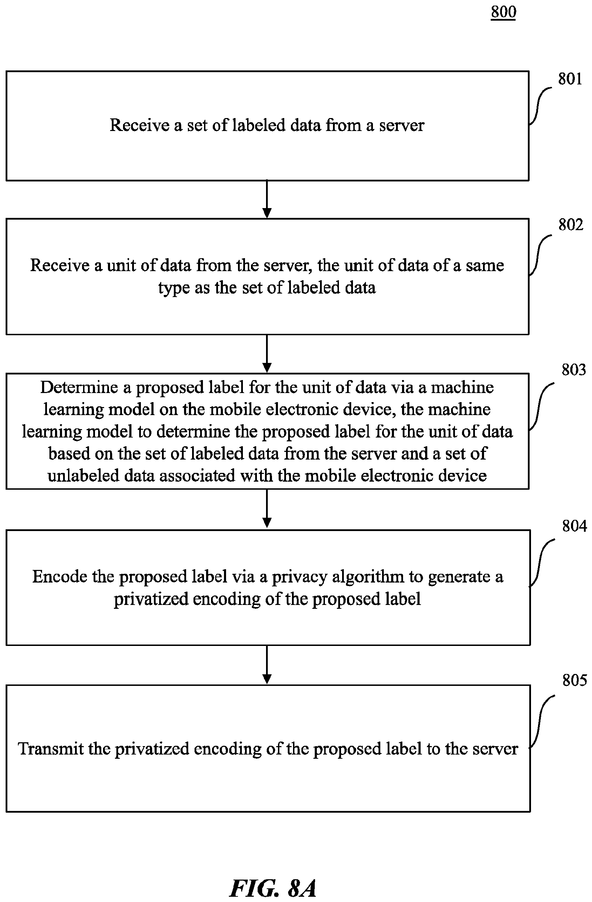

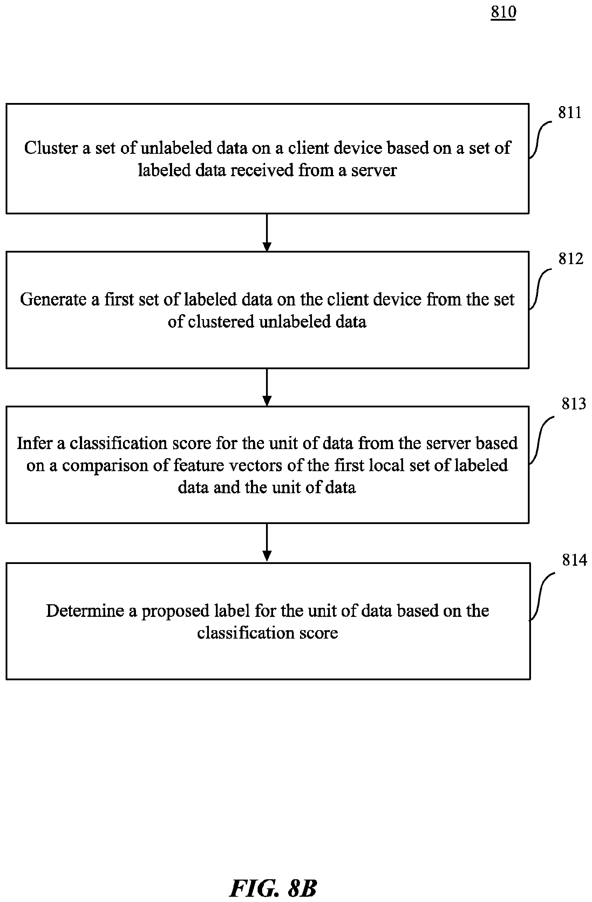

**Figures 8A-8B** illustrates logic 800, 810 to generate a proposed label on a client device, according to an embodiment. Figure 8A illustrates general logic 800 to enable a client device to generate a crowdsourced proposed label. Figure 8B illustrates more specific logic 810 to determine, on a client device, a label for a unit of unlabeled data provided by the server.

As shown in Figure 8A, in one embodiment logic 800 can enable a client device, such as but not limited to one of the client devices 210 of Figure 2, to receive a set of labeled data from a server, as shown at block 801. The client device, as shown at block 802, can also receive a unit of data from the server, the unit of data of a same type as the set of labeled data. For example, the set of labeled data and the unit of data from the server can each be of an image data type, a text data type, or another type of data that can be used to train a machine learning network, such as, but not limited to a machine learning classifier network or a machine learning predictor network. The logic 800 can enable the client device to determine a proposed label for the unit of data via a classification model on the mobile electronic device, as shown at block 803. The machine learning model can determine the proposed label for the unit of data based on the set of labeled data from the server and a set of unlabeled data associated with the mobile electronic device. The unlabeled data associated with the mobile electronic device can be data stored locally on the mobile electronic device or data retrieved from a remote storage service associated with a user of the mobile electronic device. The logic 800 can then enable the client device to encode the proposed label via a privacy algorithm to generate a privatized encoding of the proposed label, as shown at block 804. The logic 800 can then enable the client device to transmit the privatized encoding of the proposed label to the server, as shown at block 805.

As shown in Figure 8B, in one embodiment, logic 810 can enable a client device as described herein to determine a proposed label via on-device semi-supervised learning. The on-device semi-supervised learning can be performed using a generative adversarial network as described herein.

In one embodiment, logic 810 can enable a client device to cluster a set of unlabeled data on a client device based on a set of labeled data received from a server. The logic 810 can enable the client device to cluster a set of unlabeled data based on a set of labeled data received from the server, as shown at block 811. The client device can then generate a first set of labeled data on the client device from the set of clustered unlabeled data, as shown at block 812. The logic 810 can then enable the client device to infer a classification score for the unit of data from the server based on a comparison of feature vectors of the first local set of labeled data and the unit of data, as shown at block 813. At block 814, the client device, based on logic 810, can determine a proposed label for the unit of data based on the classification score.

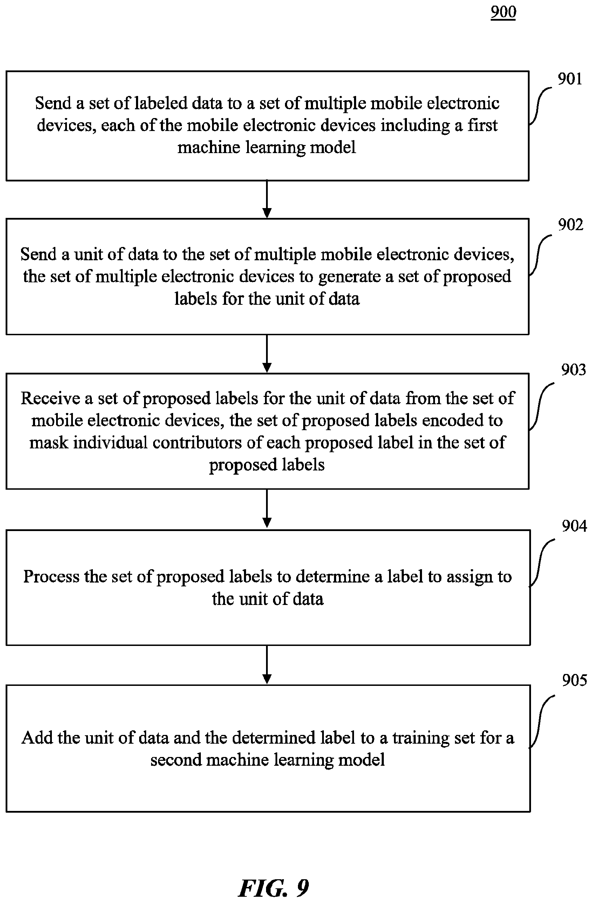

**Figure 9** illustrates logic 900 to enable a server to crowdsource labeling of unlabeled data, according to an embodiment. In one embodiment, the logic 900 can enable crowdsourced labeling that enables a set of unlabeled training data to be labeled via a set of proposed labels contributed by a large plurality of client devices. The crowdsourced labeling can be performed in a privatized manner, such that the database that stored the crowdsourced labels cannot be queried to determine the identity of any single contributor of crowdsourced data. The logic 900 can be performed on a server as described herein, such as the server 130 of Figure 1A, Figure 2, and Figure 3.

In one embodiment, the logic 900 configures a server to send a set of labeled data to a set of multiple mobile electronic devices, each of the mobile electronic devices includes a first machine learning model, as shown at block 901. As shown at block 902, the logic 900 can configure the server to send a unit of data to the set of multiple mobile electronic devices. The set of multiple electronic devices can then generate a set of proposed labels for the unit of data. The server, based on logic 900, can then receive a set of proposed labels for the unit of data from the set of mobile electronic devices, as shown at block 903. The set of proposed labels can be encoded to mask individual contributors of each proposed label in the set of proposed labels. The encoding can be performed based on any of the privatization techniques described herein. As shown at block 904, the logic 900 can enable the server to process the set of proposed labels to determine a label to assign to the unit of data. The server can process the set of proposed labels to determine the most frequently proposed label for a unit of unlabeled data provided to the client device by the server. As shown at block 905, the logic 900 can enable the server to add the unit of data and the determined label to a training set for a second machine learning model. In one embodiment, the second machine learning model can be a variant of the first machine learning model, such that the client and server can engage in an iterative process to enhance the accuracy of a machine learning model. For example, the first machine learning model on the client devices can be used to train data that will be used to enhance the accuracy of a second machine learning model based on the server.

The second machine learning model can be trained using unlabeled data that is labeled via the crowdsourced labeling technique described herein. The second machine learning model can then be deployed to the client devices, for example, during an operating system update. The second machine learning model can then be used to generate proposed labels for data that can be used to train a third machine learning model. Additionally, data for multiple classifier and predictor models can be labeled, with the various classifier and predictor models being iteratively deployed to client devices as the various models mature and gain enhanced accuracy as classification and prediction techniques.

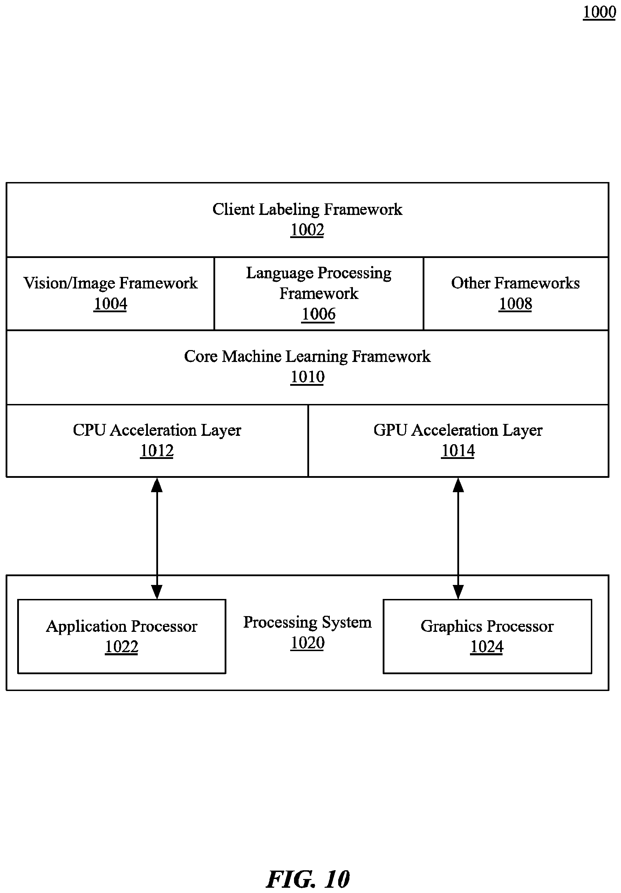

**Figure 10** illustrates compute architecture 1000 on a client device that can be used to enable on-device, semi-supervised training and inferencing using machine learning algorithms, according to embodiments described herein. In one embodiment, compute architecture 1000 includes a client labeling framework 1002 that can be configured to leverage a processing system 1020 on a client device. The client labeling framework 1002 includes a vision/image framework 1004, a language processing framework 1006, and one or more other frameworks 1008, which each can reference primitives provided by a core machine learning framework 1010. The core machine learning framework 1010 can access resources provided via a CPU acceleration layer 1012 and a GPU acceleration layer 1014. The CPU acceleration layer 1012 and the GPU acceleration layer 1014 each facilitate access to a processing system 1020 on the various client devices described herein. The processing system includes an application processor 1022 and a graphics processor 1024, each of which can be used to accelerate operations of the core machine learning framework 1010 and the various higher-level frameworks that operate via primitives provided via the core machine learning framework. In one embodiment, the various frameworks and hardware resources of the compute architecture 1000 can be used for inferencing operations via a machine learning model, as well as training operations for a machine learning model. For example, a client device can use the compute architecture 1000 to perform semi-supervised learning via a generative adversarial network (GAN) as described herein. The client device can then use the trained GAN to infer proposed labels for a unit of unlabeled data provided by a server.

Additional Exemplary Computing Devices

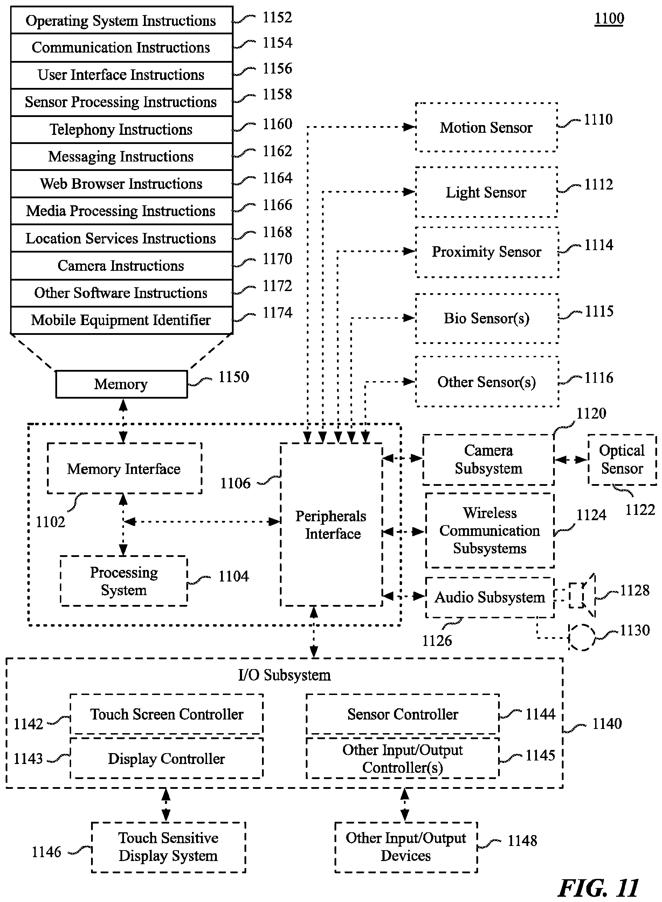

**Figure 11** is a block diagram of a device architecture 1100 for a mobile or embedded device, according to an embodiment. The device architecture 1100 includes a memory interface 1102, a processing system 1104 including one or more data processors, image processors and/or graphics processing units, and a peripherals interface 1106. The various components can be coupled by one or more communication buses or signal lines. The various components can be separate logical components or devices or can be integrated in one or more integrated circuits, such as in a system on a chip integrated circuit.

The memory interface 1102 can be coupled to memory 1150, which can include highspeed random-access memory such as static random-access memory (SRAM) or dynamic random-access memory (DRAM) and/or non-volatile memory, such as but not limited to flash memory (e.g., NAND flash, NOR flash, etc.).

Sensors, devices, and subsystems can be coupled to the peripherals interface 1106 to facilitate multiple functionalities. For example, a motion sensor 1110, a light sensor 1112, and a proximity sensor 1114 can be coupled to the peripherals interface 1106 to facilitate the mobile device functionality. One or more biometric sensor(s) 1115 may also be present, such as a fingerprint scanner for fingerprint recognition or an image sensor for facial recognition. Other sensors 1116 can also be connected to the peripherals interface 1106, such as a positioning system (e.g., GPS receiver), a temperature sensor, or other sensing device, to facilitate related functionalities. A camera subsystem 1120 and an optical sensor 1122, e.g., a charged coupled device (CCD) or a complementary metal-oxide semiconductor (CMOS) optical sensor, can be utilized to facilitate camera functions, such as recording photographs and video clips.

Communication functions can be facilitated through one or more wireless communication subsystems 1124, which can include radio frequency receivers and transmitters and/or optical (e.g., infrared) receivers and transmitters. The specific design and implementation of the wireless communication subsystems 1124 can depend on the communication network(s) over which a mobile device is intended to operate. For example, a mobile device including the illustrated device architecture 1100 can include wireless communication subsystems 1124 designed to operate over a GSM network, a CDMA network, an LTE network, a Wi-Fi network, a Bluetooth network, or any other wireless network. In particular, the wireless communication subsystems 1124 can provide a communications mechanism over which a media playback application can retrieve resources from a remote media server or scheduled events from a remote calendar or event server.

An audio subsystem 1126 can be coupled to a speaker 1128 and a microphone 1130 to facilitate voice-enabled functions, such as voice recognition, voice replication, digital recording, and telephony functions. In smart media devices described herein, the audio subsystem 1126 can be a high-quality audio system including support for virtual surround sound.

The I/O subsystem 1140 can include a touch screen controller 1142 and/or other input controller(s) 1145. For computing devices including a display device, the touch screen controller 1142 can be coupled to a touch sensitive display system 1146 (e.g., touch-screen). The touch sensitive display system 1146 and touch screen controller 1142 can, for example, detect contact and movement and/or pressure using any of a plurality of touch and pressure sensing technologies, including but not limited to capacitive, resistive, infrared, and surface acoustic wave technologies, as well as other proximity sensor arrays or other elements for determining one or more points of contact with a touch sensitive display system 1146. Display output for the touch sensitive display system 1146 can be generated by a display controller 1143. In one embodiment, the display controller 1143 can provide frame data to the touch sensitive display system 1146 at a variable frame rate.

In one embodiment, a sensor controller 1144 is included to monitor, control, and/or processes data received from one or more of the motion sensor 1110, light sensor 1112, proximity sensor 1114, or other sensors 1116. The sensor controller 1144 can include logic to interpret sensor data to determine the occurrence of one of more motion events or activities by analysis of the sensor data from the sensors.

In one embodiment, the I/O subsystem 1140 includes other input controller(s) 1145 that can be coupled to other input/control devices 1148, such as one or more buttons, rocker switches, thumb-wheel, infrared port, USB port, and/or a pointer device such as a stylus, or control devices such as an up/down button for volume control of the speaker 1128 and/or the microphone 1130.

In one embodiment, the memory 1150 coupled to the memory interface 1102 can store instructions for an operating system 1152, including portable operating system interface (POSIX) compliant and non-compliant operating system or an embedded operating system. The operating system 1152 may include instructions for handling basic system services and for performing hardware dependent tasks. In some implementations, the operating system 1152 can be a kernel.

The memory 1150 can also store communication instructions 1154 to facilitate communicating with one or more additional devices, one or more computers and/or one or more servers, for example, to retrieve web resources from remote web servers. The memory 1150 can also include user interface instructions 1156, including graphical user interface instructions to facilitate graphic user interface processing.

Additionally, the memory 1150 can store sensor processing instructions 1158 to facilitate sensor-related processing and functions; telephony instructions 1160 to facilitate telephone-related processes and functions; messaging instructions 1162 to facilitate electronic-messaging related processes and functions; web browser instructions 1164 to facilitate web browsing-related processes and functions; media processing instructions 1166 to facilitate media processing-related processes and functions; location services instructions including GPS and/or navigation instructions 1168 and Wi-Fi based location instructions to facilitate location based functionality; camera instructions 1170 to facilitate camera-related processes and functions; and/or other software instructions 1172 to facilitate other processes and functions, e.g., security processes and functions, and processes and functions related to the systems. The memory 1150 may also store other software instructions such as web video instructions to facilitate web video-related processes and functions; and/or web shopping instructions to facilitate web shopping-related processes and functions. In some implementations, the media processing instructions 1166 are divided into audio processing instructions and video processing instructions to facilitate audio processing-related processes and functions and video processing-related processes and functions, respectively. A mobile equipment identifier, such as an International Mobile Equipment Identity (IMEI) 1174 or a similar hardware identifier can also be stored in memory 1150.

Each of the above identified instructions and applications can correspond to a set of instructions for performing one or more functions described above. These instructions need not be implemented as separate software programs, procedures, or modules. The memory 1150 can include additional instructions or fewer instructions. Furthermore, various functions may be implemented in hardware and/or in software, including in one or more signal processing and/or application specific integrated circuits.

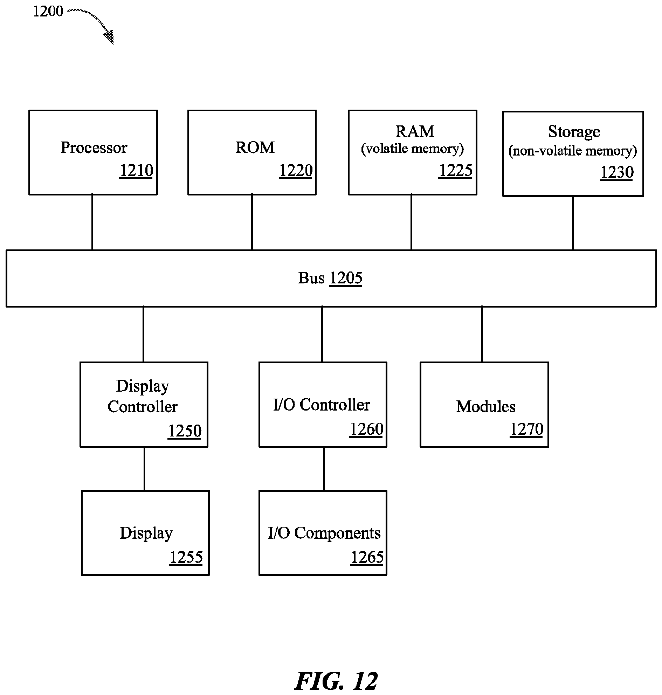

**Figure 12** is a block diagram illustrating a computing system 1200 that can be used in conjunction with one or more of the embodiments described herein. The illustrated computing system 1200 can represent any of the devices or systems (e.g., client device 110, server 130) described herein that perform any of the processes, operations, or methods of the disclosure. Note that while the computing system illustrates various components, it is not intended to represent any particular architecture or manner of interconnecting the components as such details are not germane to the present disclosure. It will also be appreciated that other types of systems that have fewer or more components than shown may also be used with the present disclosure.

As shown, the computing system 1200 can include a bus 1205 which can be coupled to a processor 1210, ROM (Read Only Memory) 1220, RAM (Random Access Memory) 1225, and storage memory 1230 (e.g., non-volatile memory). The RAM 1225 is illustrated as volatile memory. However, in some embodiments the RAM 1225 can be non-volatile memory. The processor 1210 can retrieve stored instructions from one or more of the memories 1220, 1225, and 1230 and execute the instructions to perform processes, operations, or methods described herein. These memories represent examples of a non-transitory machine-readable medium (or computer-readable medium) or storage containing instructions which when executed by a computing system (or a processor), cause the computing system (or processor) to perform operations, processes, or methods described herein. The RAM 1225 can be implemented as, for example, dynamic RAM (DRAM), or other types of memory that require power continually in order to refresh or maintain the data in the memory. Storage memory 1230 can include, for example, magnetic, semiconductor, tape, optical, removable, non-removable, and other types of storage that maintain data even after power is removed from the system. It should be appreciated that storage memory 1230 can be remote from the system (e.g., accessible via a network).

A display controller 1250 can be coupled to the bus 1205 in order to receive display data to be displayed on a display device 1255, which can display any one of the user interface features or embodiments described herein and can be a local or a remote display device. The computing system 1200 can also include one or more input/output (I/O) components 1265 including mice, keyboards, touch screen, network interfaces, printers, speakers, and other devices. Typically, the I/O components 1265 are coupled to the system through an input/output controller 1260.

Modules 1270 (or components, units, functions, or logic) can represent any of the functions or engines described above, such as, for example, the privacy engine 353. Modules 1270 can reside, completely or at least partially, within the memories described above, or within a processor during execution thereof by the computing system. In addition, modules 1270 can be implemented as software, firmware, or functional circuitry within the computing system, or as combinations thereof.

In addition, the hardware-accelerated engines / functions are contemplated to include any implementations in hardware, firmware, or combination thereof, including various configurations which can include hardware / firmware integrated into the SoC as a separate processor, or included as special purpose CPU (or core), or integrated in a coprocessor on the circuit board, or contained on a chip of an extension circuit board, etc. Accordingly, although such accelerated functions are not necessarily required to implement differential privacy, some embodiments herein, can leverage the prevalence of specialized support for such functions (e.g., cryptographic functions) to potentially improve the overall efficiency of implementations.

It should be noted that the term "approximately" or "substantially" may be used herein and may be interpreted as "as nearly as practicable," "within technical limitations," and the like. In addition, the use of the term "or" indicates an inclusive or (e.g., and/or) unless otherwise specified.

Embodiments described herein provide a technique to crowdsource labeling of training data for a machine learning model while maintaining the privacy of the data provided by crowdsourcing participants. Client devices can be used to generate proposed labels for a unit of data to be used in a training dataset. One or more privacy mechanisms are used to protect user data when transmitting the data to a server.

One embodiment provides for a mobile electronic device comprising a non-transitory machine-readable medium to store instructions, the instructions to cause the mobile electronic device to receive a set of labeled data from a server; receive a unit of data from the server, the unit of data of a same type of data as the set of labeled data; determine a proposed label for the unit of data via a machine learning model on the mobile electronic device, the machine learning model to determine the proposed label for the unit of data based on the set of labeled data from the server and a set of unlabeled data associated with the mobile electronic device; encode the proposed label via a privacy algorithm to generate a privatized encoding of the proposed label; and transmit the privatized encoding of the proposed label to the server.

One embodiment provides for a data processing system comprising a memory device to store instructions and one or more processors to execute the instructions stored on the memory device. The instructions cause the data processing system to perform operations comprising sending a set of labeled data to a set of multiple mobile electronic devices, each of the mobile electronic devices including a first machine learning model; sending a unit of data to the set of multiple mobile electronic devices, the set of multiple electronic devices to generate a set of proposed labels for the unit of data; receiving a set of proposed labels for the unit of data from the set of mobile electronic devices, the set of proposed labels encoded to mask individual contributors of each proposed label in the set of proposed labels; processing the set of proposed labels to determine a label to assign to the unit of data; and adding the unit of data and the label to a training set for use in training a second machine learning model.

In the foregoing description, example embodiments of the disclosure have been described. It will be evident that various modifications can be made thereto without departing from the scope of the disclosure. The specification and drawings are, accordingly, to be regarded in an illustrative sense rather than a restrictive sense. The specifics in the descriptions and examples provided may be used anywhere in one or more embodiments. The various features of the different embodiments or examples may be variously combined with some features included and others excluded to suit a variety of different applications. Examples may include subject matter such as a method, means for performing acts of the method, at least one machine-readable medium including instructions that, when performed by a machine cause the machine to perform acts of the method, or of an apparatus or system according to embodiments and examples described herein. Additionally, various components described herein can be a means for performing the operations or functions described herein. Accordingly, the true scope of the embodiments will become apparent to the skilled practitioner upon a study of the drawings, specification, and following claims, which claims define the scope of the invention.

**Claims**

**1.** A mobile electronic device (110a-110n, 111a-111n, 112a-112n) comprising:

    a machine-readable medium to store instructions;
    one or more processors to execute the instructions stored on the machine-readable medium, the instructions to cause the mobile electronic device (110a-110n, 111a-111n, 112a-112n) to:

        receive a set of labeled data (132) from a server (130);
        receive a unit of data (131[i]) from the server (130), the unit of data (131[i]) of a same type of data as the set of labeled data (132);
        determine a proposed label for the unit of data (131[i]) via a machine learning model (136a-136n, 137a-137n, 138a-138n) on the mobile electronic device (110a-110n, 111a-111n, 112a-112n), the machine learning model (136a-136n, 137a-137n, 138a-138n) to determine the proposed label for the unit of data (131[i]) based on the set of labeled data (132) from the server (130) and a set of unlabeled data associated with the mobile electronic device (110a-110n, 111a-111n, 112a-112n), wherein to determine the proposed label for the unit of data (131[i]) from the server (130) includes to cluster the set of unlabeled data based on the set of labeled data (132) from the server via the machine learning model to generate a set of clustered unlabeled data, compare the unit of data (131[i]) from the server (130) with the set of clustered unlabeled data, and determine the proposed label for the unit of data (131[i]) from the server based on the comparison; encode the proposed label via a privacy algorithm to generate a privatized encoding of the proposed label; and

transmit the privatized encoding of the proposed label to the server (130).

2. The mobile electronic device as in claim 1, wherein the machine learning model (136a-136n, 137a-137n, 138a-138n) is included in a system image installed to the mobile electronic device and the machine learning model is part of a generative adversarial network.

3. The mobile electronic device as in claim 1 or 2, the mobile electronic device to receive the machine learning model from the server (130).

4. The mobile electronic device as in claim 1, 2 or 3, wherein the set of unlabeled data associated with the mobile electronic device is at least temporarily stored on the mobile electronic device, the mobile electronic device is associated with an account of a remote storage service, and a subset of the set of unlabeled data is retrieved from the remote storage service.

5. The mobile electronic device of any preceding claim, wherein to compare the unit of data (131[i]) from the server (130) with the set of clustered unlabeled data includes to:

   generate a first local set of labeled data from the set of clustered unlabeled data based on the set of labeled data from the server (130); and
   infer a classification score for the unit of data (131[i]) from the server (130) based on a comparison of feature vectors of the first local set of labeled data and the unit of data (131 [i]) from the server (130) via a machine learning framework stored on the mobile electronic device.

6. The mobile electronic device as in claim 5, the machine learning model to determine the proposed label for the unit of data (131[i]) from the server (130) based additionally on a set of labeled data associated with the mobile electronic device that is distinct from the set of labeled data from the server (130).

7. The mobile electronic device as in any preceding claim, wherein the machine learning model is part of a generative adversarial network.

8. The mobile electronic device as in any preceding claim wherein the privacy algorithm is to cause the mobile electronic device to transform the proposed label to mask an individual contributor of the proposed label; and
   wherein the privacy algorithm includes a secure multi-party compute operation or a homomorphic encryption operation; and
   wherein the privacy algorithm is a differential privacy algorithm or
   wherein the privacy algorithm is a histogram-based differential privacy algorithm.

9. The mobile electronic device as in any preceding claim, wherein the unit of data (131[i]) from the server, the set of labeled data from the server (130), and the set of unlabeled data associated with the mobile electronic device each have an image data type or a text data type and the machine learning model on the mobile electronic device is an image classifier or a text data classifier.

10. A data processing system comprising:

   a memory device to store instructions;
   one or more processors to execute the instructions stored on the memory device, the instructions to cause the data processing system to perform operations comprising:

sending a set of labeled data to a set of multiple mobile electronic devices (210), each of the mobile electronic devices (210) including a first machine learning model (136a-136n, 137a-137n, 138a-138n);

sending a unit of data (131) to the set of multiple mobile electronic devices (210), the set of multiple mobile electronic devices (210) to generate a set of proposed labels 212 for the unit of data;

receiving a set of proposed labels 212 for the unit of data 131 from the set of multiple mobile electronic devices (210), the set of proposed labels 212 encoded to mask individual contributors of each proposed label in the set of proposed labels 212, the set of proposed labels 212 having been generated by the set of multiple mobile electronic devices (210) based on the set of labeled data (132) sent to the set of multiple mobile devices (210) and multiple sets of unlabeled data, wherein each set of the multiple sets of unlabeled data are associated with a respective mobile electronic device in the set of multiple mobile electronic devices (210);

processing the set of proposed labels (212) to determine a label to assign to the unit of data (131), wherein to determine the label to assign to the unit of data (131) includes determining a most frequently proposed label in the set of proposed labels (212) received from the set of multiple mobile electronic devices (210); and

adding the unit of data (131) and the label to a training set (231) for use in training a second machine learning model of the data processing system.

11. The data processing system as in claim 10, the operations additionally including training the second machine learning model on the data processing system using the training set, wherein the second machine learning model is an update of the first machine learning model, wherein the set of labeled data and the unit of data sent to the set of multiple mobile electronic devices each include image data or text data, and wherein the first and second machine learning models include image classifiers or text data classifiers.

12. The data processing system as in claim 10 or 11, wherein the set of proposed labels (212) are at least partially encoded using a homomorphic encryption algorithm and processing the set of proposed labels (212) includes performing a homomorphic addition operation.

13. The data processing system as in claim 10, 11 or 12 wherein the set of proposed labels (212) are at least partially encoded using a differential privacy algorithm and processing the set of proposed labels (212) includes generating a proposed label histogram.

14. The data processing system as in any of claims 10 to 13, wherein the set of proposed labels (212) are at least partially encoded using a differential privacy algorithm and processing the set of proposed labels (212) includes applying a count-mean-sketch algorithm to the set of proposed labels (212).

**Patentansprüche**

1. Mobile elektronische Vorrichtung (110a-110n, 111a-111n, 112a-112n) umfassend:

ein maschinenlesbares Medium zum Speichern von Anweisungen;
einen oder mehrere Prozessoren zum Ausführen der auf dem maschinenlesbaren Medium gespeicherten Anweisungen, wobei die Anweisungen die mobile elektronische Vorrichtung (110a-110n, 111a-111n, 112a-112n) veranlassen zum:

Empfangen eines Satz von gekennzeichneten Daten (132) von einem Server (130);
Empfangen einer Dateneinheit (131[i]) von dem Server (130), wobei die Dateneinheit (131[i]) von einem gleichen Datentyp ist wie der Satz von gekennzeichneten Daten (132);
Bestimmen einer vorgeschlagenen Kennzeichnung für die Dateneinheit (131[i]) über ein Maschinenlernmodell (136a-136n, 137a-137n, 138a-138n) auf der mobilen elektronischen Vorrichtung (110a-110n, 111a-111n, 112a-112n), wobei das Maschinenlernmodell (136a-136n, 137a-137n, 138a-138n) die vorgeschlagene Kennzeichnung für die Dateneinheit (131[i]) basierend auf dem Satz von gekennzeichneten Daten (132) von dem Server (130) und einem Satz nicht gekennzeichneter Daten, die mit der mobilen elektronischen Vorrichtung (110a-110n, 111a-111n, 112a-112n) verknüpft sind, bestimmen, wobei Bestimmen der vorgeschlagenen Kennzeichnung für die Dateneinheit (131[i]) von dem Server (130) Clustern des Satzes von nicht gekennzeichneten Daten basierend auf dem Satz von gekennzeichneten Daten (132) von dem Server über das Maschinenlernmodell beinhaltet, um einen Satz von geclusterten nicht gekennzeichneten Daten zu erzeugen, Vergleichen der Dateneinheit (131[i]) von dem Server (130) mit dem Satz von geclusterten nicht gekennzeichneten Daten, und Bestimmen der vorgeschlagenen Kennzeichnung für die Dateneinheit (131[i]) von dem Server basierend auf dem Vergleich;
Kodieren der vorgeschlagenen Kennzeichnung über einen Privatsphäre-Algorithmus, um eine privatisierte Kodierung der vorgeschlagenen Kennzeichnung zu erzeugen; und
Übertragen der privatisierten Kodierung der vorgeschlagenen Kennzeichnung an den Server (130).

2. Mobile elektronische Vorrichtung nach Anspruch 1, wobei das Maschinenlernmodell (136a-136n, 137a-137n, 138a-138n) in einem Systemabbild beinhaltet ist, das auf der mobilen elektronischen Vorrichtung installiert ist, und das Maschinenlernmodell Teil eines Generative Adversarial Networks ist.

3. Mobile elektronische Vorrichtung nach Anspruch 1 oder 2, wobei die mobile elektronische Vorrichtung das Maschinenlernmodell von dem Server (130) empfängt.

4. Mobile elektronische Vorrichtung nach Anspruch 1, 2 oder 3, wobei der Satz von nicht gekennzeichneten Daten, der mit der mobilen elektronischen Vorrichtung verknüpft ist, zumindest temporär auf der mobilen elektronischen Vorrichtung gespeichert ist, die mobile elektronische Vorrichtung mit einem Konto eines entfernten Speicherdienstes verknüpft ist und ein Untersatz des Satzes von nicht gekennzeichneten Daten von dem entfernten Speicherdienst abgerufen wird.

5. Mobile elektronische Vorrichtung nach einem vorhergehenden Anspruch, wobei Vergleichen der Dateneinheit (131[i]) von dem Server (130) mit dem Satz von geclusterten nicht gekennzeichneten Daten Folgendes beinhaltet:

Erzeugen eines ersten lokalen Satzes von gekennzeichneten Daten aus dem Satz von geclusterten nicht gekennzeichneten Daten basierend auf dem Satz von gekennzeichneten Daten von dem Server (130); und
Herleiten eines Klassifizierungswerts für die Dateneinheit (131[i]) von dem Server (130) basierend auf einem Vergleich von Merkmalsvektoren des ersten lokalen Satzes von gekennzeichneten Daten und der Dateneinheit (131[i]) von dem Server (130) über ein Maschinenlern-Framework, das auf der mobilen elektronischen Vorrichtung gespeichert ist.

6. Mobile elektronische Vorrichtung nach Anspruch 5, wobei das Maschinenlernmodell die vorgeschlagene Kennzeichnung für die Dateneinheit (131[i]) von dem Server (130) bestimmt, basierend zusätzlich auf einem Satz von gekennzeichneten Daten, der mit der mobilen elektronischen Vorrichtung verknüpft ist, der sich von dem Satz von gekennzeichneten Daten von dem Server (130) unterscheidet.

7. Mobile elektronische Vorrichtung nach einem vorhergehenden Anspruch, wobei das Maschinenlernmodell Teil eines Generative Adversarial Networks ist.

8. Mobile elektronische Vorrichtung nach einem vorhergehenden Anspruch, wobei der Privatsphäre-Algorithmus die mobile elektronische Vorrichtung veranlasst, die vorgeschlagene Kennzeichnung zu transformieren, um einen individuellen Mitwirkenden der vorgeschlagenen Kennzeichnung zu maskieren; und
wobei der Privatsphäre-Algorithmus einen sicheren Mehrparteien-Rechenvorgang oder einen homomorphen Verschlüsselungsvorgang beinhaltet; und
wobei der Privatsphäre-Algorithmus ein differentieller Privatsphäre-Algorithmus ist oder
wobei der Privatsphäre-Algorithmus ein Histogramm-basierter differentieller Privatsphäre-Algorithmus ist.

9. Mobile elektronische Vorrichtung nach einem vorhergehenden Anspruch, wobei die Dateneinheit (131[i]) von dem Server, der Satz von gekennzeichneten Daten von dem Server (130) und der Satz von nicht gekennzeichneten Daten, der mit der mobilen elektronischen Vorrichtung verknüpft ist, jeweils einen Bilddatentyp oder einen Textdatentyp aufweisen, und das Maschinenlernmodell auf der mobilen elektronischen Vorrichtung ein Bildklassifizierer oder ein Textdatenklassifizierer ist.

10. Datenverarbeitungssystem, umfassend:

eine Speichervorrichtung zum Speichern von Anweisungen;
einen oder mehrere Prozessoren zum Ausführen der in der Speichervorrichtung gespeicherten Anweisungen, wobei die Anweisungen das Datenverarbeitungssystem veranlassen, Vorgänge durchzuführen, die umfassen:

Senden eines Satzes von gekennzeichneten Daten an einen Satz von mehreren mobilen elektronischen Vorrichtungen (210), wobei jede der mobilen elektronischen Vorrichtungen (210) ein erstes Maschinenlernmodell (136a-136n, 137a-137n, 138a-138n) beinhaltet;

Senden einer Dateneinheit (131) an den Satz von mehreren mobilen elektronischen Vorrichtungen (210), wobei der Satz von mehreren mobilen elektronischen Vorrichtungen (210) einen Satz von vorgeschlagenen Kennzeichnungen (212) für die Dateneinheit erzeugt;

Empfangen eines Satzes von vorgeschlagenen Kennzeichnungen (212) für die Dateneinheit (131) von dem Satz von mehreren mobilen elektronischen Vorrichtungen (210), wobei der Satz von vorgeschlagenen Kennzeichnungen (212) kodiert ist, um individuelle Mitwirkende von jeder vorgeschlagenen Kennzeichnung in dem Satz von vorgeschlagenen Kennzeichnungen (212) zu maskieren, wobei der Satz von vorgeschlagenen Kennzeichnungen (212) von dem Satz mehrerer mobiler elektronischer Vorrichtungen (210) basierend auf dem Satz von gekennzeichneten Daten (132), die an den Satz mehrerer mobiler Vorrichtungen (210) gesendet wurden, und mehreren Sätzen von nicht gekennzeichneten Daten erzeugt worden ist, wobei jeder Satz der mehreren Sätze von nicht gekennzeichneten Daten mit einer jeweiligen mobilen elektronischen Vorrichtung in dem Satz mehrerer mobiler elektronischer Vorrichtungen (210) verknüpft ist;

Verarbeiten des Satzes von vorgeschlagenen Kennzeichnungen (212), um eine Kennzeichnung zu bestimmen, die der Dateneinheit (131) zuzuordnen ist, wobei das Bestimmen der Kennzeichnung, die der Dateneinheit (131) zuzuordnen ist, Bestimmen einer am häufigsten vorgeschlagenen Kennzeichnung in dem Satz von vorgeschlagenen Kennzeichnungen (212) beinhaltet, der von dem Satz von mehreren elektronischen mobilen Vorrichtungen (210) empfangen wird; und

Hinzufügen der Dateneinheit (131) und der Kennzeichnung zu einem Trainingssatz (231) zur Verwendung beim Trainieren eines zweiten Maschinenlernmodells des Datenverarbeitungssystems.

11. Datenverarbeitungssystem nach Anspruch 10, die Vorgänge zusätzlich beinhaltend Trainieren des zweiten Maschinenlernmodells auf dem Datenverarbeitungssystems unter Verwenden des Trainingssatzes, wobei das zweite Maschinenlernmodell eine Aktualisierung des ersten Maschinenlernmodells ist, wobei der Satz von gekennzeichneten Daten und die Dateneinheit, die zu dem Satz von mehreren mobilen elektronischen Vorrichtungen gesendet werden, jeweils Bilddaten oder Textdaten beinhalten, und wobei das erste und zweite Maschinenlernmodell Bildklassifizierer oder Textdatenklassifizierer beinhaltet.

12. Datenverarbeitungssystem nach Anspruch 10 oder 11, wobei der Satz von vorgeschlagenen Kennzeichnungen (212) zumindest teilweise unter Verwenden eines homomorphen Verschlüsselungsalgorithmus kodiert wird und Verarbeiten des Satzes von vorgeschlagenen Kennzeichnungen (212) Durchführen eines homomorphen Additionsvorgangs beinhaltet.

13. Datenverarbeitungssystem nach Anspruch 10, 11 oder 12, wobei der Satz von vorgeschlagenen Kennzeichnungen (212) zumindest teilweise unter Verwenden eines differentiellen Privatsphäre-Algorithmus kodiert wird und Verarbeiten des Satzes von vorgeschlagenen Kennzeichnungen (212) Erzeugen eines Histogramms von vorgeschlagenen Kennzeichnungen beinhaltet.

14. Datenverarbeitungssystem nach einem der Ansprüche 10 bis 13, wobei der Satz von vorgeschlagenen Kennzeichnungen (212) zumindest teilweise unter Verwenden eines differentiellen Privatsphäre-Algorithmus kodiert wird und Verarbeiten des Satzes von vorgeschlagenen Kennzeichnungen (212) Anwenden eines Count-Mean-Sketch-Algorithmus auf den Satz von vorgeschlagenen Kennzeichnungen (212) beinhaltet.

## Revendications

1. Un dispositif électronique mobile (110a-110n, 111a-111n, 112a-112n) comprenant :

un support lisible par machine destiné à stocker des instructions ;
un ou plusieurs processeurs destinés à exécuter les instructions stockées sur le support lisible par machine, les instructions faisant en sorte que le dispositif électronique mobile (110a-110n, 111a-111n, 112a-112n) :

reçoive d'un serveur (130) un ensemble de données marquées (132) ;
reçoive du serveur (130) une donnée unitaire (131[i]), la donnée unitaire (131[i]) étant d'un même type de donnée que l'ensemble de données marquées (132) ;
détermine un marquage proposé pour la donnée unitaire (131[i]) via un modèle d'apprentissage machine (136a-136n, 137a-137n, 138a-138n) sur le dispositif électronique mobile (110a-110n, 111a-111n, 112a-112n), le modèle d'apprentissage machine (136a-136n, 137a-137n, 138a-138n) étant destiné à déterminer le marquage proposé pour la donnée unitaire (131[i]) sur la base de l'ensemble de données marquées (132) provenant du serveur (130) et d'un ensemble de données non marquées associé au dispositif électronique mobile (110a-110n, 111a-111n, 112a-112n), dans lequel la détermination du marquage proposé pour la donnée unitaire (131[i]) provenant du serveur (130) comprend le regroupement de l'ensemble de données non marquées sur la base de l'ensemble de données marquées (132) provenant du serveur via le modèle d'apprentissage machine pour générer un ensemble de données non marquées regroupées, la comparaison de la donnée unitaire (131[i]) provenant du serveur (130) à l'ensemble de données non marquées regroupées, et la détermination du marquage proposé pour la donnée unitaire (131[i]) provenant du serveur sur la base de la comparaison ;
code le marquage proposé via un algorithme de privatisation pour générer un codage privatisé du marquage proposé ; et
transmette au serveur (130) le codage privatisé du marquage proposé.

2. Le dispositif électronique mobile selon la revendication 1, dans lequel le modèle d'apprentissage machine (136a-136n, 137a-137n, 138a-138n) est inclus dans une image système installée sur le dispositif électronique mobile, et le modèle d'apprentissage machine fait partie d'un réseau contradictoire productif.

3. Le dispositif électronique mobile selon la revendication 1 ou 2, dans lequel le dispositif électronique mobile doit recevoir du serveur (130) le modèle d'apprentissage machine.

4. Le dispositif électronique mobile selon la revendication 1, 2 ou 3, dans lequel l'ensemble de données non marquées associé au dispositif électronique mobile est stocké au moins temporairement sur le dispositif électronique mobile, le dispositif électronique mobile est associé à un compte d'un service de stockage distant, et un sous-ensemble de l'ensemble de données non marquées est récupéré depuis le service de stockage distant.

5. Le dispositif électronique mobile de l'une des revendications précédentes, dans lequel la comparaison de la donnée unitaire (131[i]) provenant du serveur (130) à l'ensemble de données non marquées regroupées comprend :

la génération d'un premier ensemble local de données marquées à partir de l'ensemble de données non marquées regroupées sur la base de l'ensemble de données marquées provenant du serveur (130) ; et
l'inférence d'un score de classification pour la donnée unitaire (131[i]) provenant du serveur (130) sur la base d'une comparaison de vecteurs de caractéristiques du premier ensemble local de données marquées et de la donnée unitaire (131[i]) provenant du serveur (130) via un framework d'apprentissage machine stocké sur le dispositif électronique mobile.

6. Le dispositif électronique mobile selon la revendication 5, dans lequel la détermination par le modèle d'apprentissage machine du marquage proposé pour la donnée unitaire (131[i]) provenant du serveur (130) est de plus basé sur un ensemble de données marquées associé au dispositif électronique mobile, qui est distinct de l'ensemble de données marquées provenant du serveur (130).

7. Le dispositif électronique mobile selon l'une des revendications précédentes, dans lequel le modèle d'apprentissage machine fait partie d'un réseau contradictoire productif.

8. Le dispositif électronique mobile selon l'une des revendications précédentes, dans lequel l'algorithme de privatisation est destiné à faire en sorte que le dispositif électronique mobile transforme le marquage proposé pour masquer un contributeur individuel du marquage proposé ; et
dans lequel l'algorithme de privatisation comprend une opération de calcul multi-parties sécurisé ou une opération de chiffrement homomorphique ; et
dans lequel l'algorithme de privatisation est un algorithme de privatisation différentiel ou
dans lequel l'algorithme de privatisation est un algorithme de privatisation différentiel basé sur un histogramme.

9. Le dispositif électronique mobile selon l'une des revendications précédentes, dans lequel la donnée unitaire (131[i]) provenant du serveur, l'ensemble de données marquées provenant du serveur (130), et l'ensemble de données non marquées associé au dispositif électronique mobile ont chacun un type de données d'image ou un type de données de texte, et le modèle d'apprentissage machine sur le dispositif électronique mobile est un classifieur d'images ou un classifieur de données de texte.

**10.** Un système de traitement de données comprenant :

un dispositif de mémoire pour stocker des instructions ;
un ou plusieurs processeurs destinés à exécuter les instructions stockées sur le dispositif de mémoire, les instructions étant destinées à faire en sorte que le système de traitement de données effectue des opérations comprenant :

l'envoi d'un ensemble de données marquées à un ensemble de dispositifs électroniques mobiles multiples (210), chacun des dispositifs électroniques mobiles (210) comprenant un premier modèle d'apprentissage machine (136a-136n, 137a-137n, 138a-138n) ;
l'envoi d'une donnée unitaire (131) à l'ensemble de dispositifs électroniques mobiles multiples (210), l'ensemble de dispositifs électroniques mobiles multiples (210) étant destiné à générer un ensemble de marquages proposés (212) pour la donnée unitaire ;
la réception d'un ensemble de marquages proposés (212) pour la donnée unitaire (131) provenant de l'ensemble de dispositifs électroniques mobiles multiples (210),
l'ensemble de marquages proposés (212) étant codé pour masquer des contributeurs individuels de chaque marquage proposé de l'ensemble de marquages proposés (212), l'ensemble de marquages proposés (212) ayant été généré par l'ensemble de dispositifs électroniques mobiles multiples (210) sur la base de données marquées (132) envoyées à l'ensemble de dispositifs électroniques mobiles multiples (210) et d'ensembles multiples de données non marquées, chaque ensemble des multiples ensembles de données non marquées étant associé à un dispositif électronique mobile respectif de l'ensemble de dispositifs électroniques mobiles multiples (210) ;
le traitement de l'ensemble de marquages proposés (212) pour déterminer un marquage à attribuer à la donnée unitaire (131), la détermination du marquage à attribuer à la donnée unitaire (131) comprenant la détermination d'un marquage le plus fréquemment proposé de l'ensemble de marquages proposés (212) reçu en provenance de l'ensemble de dispositifs électroniques mobiles multiples (210) ; et
l'ajout de la donnée unitaire (131) et du marquage à un ensemble d'entraînement (231) destiné à être utilisé pour l'entraînement d'un second modèle d'apprentissage machine du système de traitement de données.

**11.** Le système de traitement de données selon la revendication 10, dans lequel les opérations comprennent en outre l'entraînement du second modèle d'apprentissage machine sur le système de traitement de données à l'aide de l'ensemble d'entraînement, dans lequel le second modèle d'apprentissage machine est une mise à jour du premier modèle d'apprentissage machine, dans lequel l'ensemble de données marquées et la donnée unitaire envoyées à l'ensemble de dispositifs électroniques mobiles multiples comprennent chacun des données d'image ou des données de texte, et dans lequel le premier et le second modèle d'apprentissage machine comprennent des classifieurs d'images ou des classifieurs de données de texte.

**12.** Le système de traitement de données selon la revendication 10 ou 11, dans lequel l'ensemble de marquages proposés (212) sont au moins partiellement codés à l'aide d'un algorithme de chiffrement homomorphique et le traitement de l'ensemble de marquages proposés (212) comprend l'exécution d'une opération d'addition homomorphique.

**13.** Le système de traitement de données selon la revendication 10, 11 ou 12, dans lequel l'ensemble de marquages proposés (212) sont au moins partiellement codés à l'aide d'un algorithme de privatisation différentiel, et le traitement de l'ensemble de marquages proposés (212) comprend la génération d'un histogramme des marquages proposés.

**14.** Le système de traitement de données selon l'une des revendications 10 à 13, dans lequel l'ensemble de marquages proposés (212) sont au moins partiellement codés à l'aide d'un algorithme de privatisation différentiel, et le traitement de l'ensemble de marquages proposés (212) comprend l'application d'un algorithme *count-mean-sketch* à l'ensemble de marquages proposés (212).

**FIG. 1A**

Labeling Package 121

Labeling Package 122

Labeling Package 123

Server 130

Unlabeled Data 131

Labeled Data 132

Machine Learning Model 135

131[i]

132

Network 120

110a ... 110n

136a ... 136n

Device Group 110

111a ... 111n

137a ... 137n

Device Group 111

112a ... 112n

138n ... 138n

Device Group 112

EP 3 525 388 B1

Device Group
110

Local Data
Clustering/
Labeling
139

| 110a | 110b | 110c | ● ● ● | 110n |
| 136a | 136b | 136c | | 136n |

Labeled
Local Data

On-device
Training
145

| 140a | 140b | 140c | | 140n |

Improved
Models

Classify
Received
Data
149

| 146a | 146b | 146c | | 146n |

Proposed
Labels

Privatize
Proposed
Labels
151

| 150a | 150b | 150c | | 150n |

*FIG. 1B*

**FIG. 2**

300

**Server 130**

Machine Learning Model 135

Improved Machine Learning Model 346

Deployment Module 352

Labeling and Training Module 330

Label Frequency Estimations 331

Frequency Estimation Module 341

Receive Module 351

Network 120

**Client Device 110**

GAN 361

Generator Module 361A

Discriminator Module 361B

Privacy Engine 353

Privacy Framework/API 355

Privacy Daemon 356

Clustered/Labeled User Data 363

Proposed Label 333

Server Provided Data 332

*FIG. 3*

400

Labeled Server
Data
402

Noise Vector
401

Unlabeled
Local Client
Data
404

Initialized GAN
415

Generator
Network
403

Generated
Data
405

Discriminator Network
406

Training
Module
407

Labeled Local
Client Data
408

*FIG. 4A*

410

Unlabeled Server
Data
412

Trained GAN
417

Trained
Generator
Network
413

Trained
Discriminator Network
416

Proposed Label
418

**FIG. 4B**

Proposed Label Encoding
500

Proposed Label Value
502

Proposed Label Vector
503

| 0 | 0 | 0 | 1 | 0 | 0 | 0 |
|---|---|---|---|---|---|---|

Universe of Labels
501

*FIG. 5A*

Proposed Label Histogram
510

Selected Label
513

Number
of
Proposals
511

Label 1  Label 2  Label 3  Label 4  Label 5

Proposed
Labels
512

*FIG. 5B*

Proposed Label Frequency Sketch
520

| | | | | | | |
|---|---|---|---|---|---|---|
| 0 | 34 | 43 | 0 | 43 | 67 | ... | 12 |
| 1 | 0 | 4 | 5 | 0 | 23 | ... | 9 |
| | 11 | 22 | 9 | 11 | 44 | ... | 5 |
| 15 | 33 | 2 | 5 | 5 | 77 | ... | 1 |

K

M

*FIG. 5C*

EP 3 525 388 B1

600

Activity Types

A, B, C, . . ., Z

Value Associated
with Proposed Label
601

Vector 6<u>02</u> = [0, 0, 0, 0, 0, 0, . . .,1]

Position 603
(e.g. position corresponding to Z)

Initialized Vector 605 = [. . ., $-C_\varepsilon$, $-C_\varepsilon$, $-C_\varepsilon$, $-C_\varepsilon$]
(e.g. uniform value)

Encoding 606 = [. . ., $-C_\varepsilon$, $-C_\varepsilon$, $-C_\varepsilon$, $-C_\varepsilon$, $+C_\varepsilon$]

Change Value
at Position 603
(e.g. flip sign)

Privatized Encoding 608 = [. . ., $(-C_\varepsilon+1)/2$, $+(C_\varepsilon+1)/2$, $+(C_\varepsilon+1)/2$, $(-C_\varepsilon+1)/2$]

Change each value (e.g. flip sign) of
the encoding with a Predetermined
Probability 609
(e.g. biased coin flip operation)

*FIG. 6A*

31

EP 3 525 388 B1

## 610

Proposed Labels

face

vehicle

. . .

Proposed Label 611

Term 612 = "face"

Hash Value 613 = 1F9C → Vector/Bit Position 625
(e.g. decimal value = 98th position)

Variant of Term
614

Representation
of Index Value
616

$h_i(Term) = H(variant_i + Term) = SHA256(i,face)$

Term
612

$h_1 = SHA256(1,face) = SHA256(1,face)$
$h_2 = SHA256(2,face) = SHA256(2,face)$

⋮

Random Variant 619

$h_r = SHA256(r,face) = $ Hash Value 613

⋮

$h_k = SHA256(k,face)$

Random Hash
Function 617

Hash Value
Portion 618
(e.g. 16 bits)

Hash Value 613 = [. . . 1F9C . . . C0AF ]

## 620

Vector 626 = [. . ., 0, 0, 1, 0, 0, . . .]

Position 625
(e.g. 98th position)

Initialized Vector 627 =   [. . ., $-C_\varepsilon$, $-C_\varepsilon$, $-C_\varepsilon$, $-C_\varepsilon$, . . .]

Encoding 628 = [. . ., $-C_\varepsilon$, $-C_\varepsilon$, $+C_\varepsilon$, $-C_\varepsilon$, $-C_\varepsilon$, . . .]

Change Value at
Position 625
(e.g. flip sign)

Privatized Encoding 632 = [. . .,$(-C_\varepsilon+1)/2$, + $(C_\varepsilon+1)/2$, $+(C_\varepsilon+1)/2$, $(-C_\varepsilon+1)/2$, . . .]

Change each value (e.g. flip sign) of
the encoding with a Predetermined
Probability 633
(e.g. biased coin flip operation)

*FIG. 6B*

700

Receive input including:

privacy parameter $\varepsilon$, a universe size $p$, and data element $d \in S$

701

Set constant $c_\varepsilon \leftarrow \dfrac{e^\varepsilon + 1}{e^\varepsilon - 1}$ and initialize vector $v \leftarrow \{ -c_\varepsilon \}^p$

702

Set $v[d] \leftarrow c_\varepsilon$

703

Sample vector $b \in \{-1, +1\}^p$, with each $b_j$ being independent and identically distributed and outputs $+1$ with probability of $\dfrac{e^\varepsilon}{e^\varepsilon + 1}$

704

Generate privatized vector $v_{priv} = \left\{ \left( \dfrac{v[j] * b_j + 1}{2} \right), \forall\ j \in [p] \right\}$

705

Return Vector $v_{priv}$

706

*FIG. 7A*

<u>710</u>

Given input including:
privacy parameter ($\varepsilon$), a universe size ($p$), and data element $s \in S$, obtain $n$
vectors $v_1, \cdots, v_n$ corresponding to the data set D = $\{d_1, \cdots, d_n\}$, such that
$v_i \leftarrow A_{client}(\varepsilon, p_i, d_i)$

711

Set counter $f_s \leftarrow 0$

712

For each tuple $v_i$, $i \in [n]$, set $f_s = f_s + v_i[s]$

713

Return $f_s$

714

*FIG. 7B*

720

Receive input including:
data element $d \in S$, privacy parameter $\varepsilon$, a universe size $p$, a set of $k$ hash functions $H = \{h_1, h_2, \dots h_k\}$ that each map $[p]$ to $[m]$, select random index j from $[k]$ to determine hash function $h_j$

721

set constant $c_\varepsilon \leftarrow \dfrac{e^\varepsilon + 1}{e^\varepsilon - 1}$ and initialize vector $v \leftarrow \{-c_\varepsilon\}^m$

722

Set $v[h_j(d)] \leftarrow c_\varepsilon$

723

Sample vector $b \in \{-1, +1\}^m$, with each $b_j$ being independent and identically distributed and outputs $+1$ with probability of $\dfrac{e^\varepsilon}{e^\varepsilon + 1}$

724

Generate privatized vector $v_{priv} = \left\{ \left( \dfrac{v[j] * b_j + 1}{2} \right), \forall\, j \in [m] \right\}$

725

Return Vector $v_{priv}$ and index j

726

*FIG. 7C*

730

Receive input including:
a set of n vectors and indices $\{(v_1, j_1), ..., (v_n, j_n)\}$, a privacy parameter $\varepsilon$, and a set of k hash functions $H = \{h_1, h_2, ... h_k\}$ that each map [p] to [m]

731

Initialize matrix $M \leftarrow 0$, where M has k rows and m columns, such that:

$$M \in \{0\}^{k \times m}$$

732

For each tuple $(v_i, j_i)$, $i \in [n]$, add $v_i$ to the $j_i$ row of M, such that:

$$M[j_i][:] \leftarrow M[j_i][:] + v_i$$

733

Return Sketch Matrix $M$

734

*FIG. 7D*

800

801

Receive a set of labeled data from a server

802

Receive a unit of data from the server, the unit of data of a same type as the set of labeled data

803

Determine a proposed label for the unit of data via a machine learning model on the mobile electronic device, the machine learning model to determine the proposed label for the unit of data based on the set of labeled data from the server and a set of unlabeled data associated with the mobile electronic device

804

Encode the proposed label via a privacy algorithm to generate a privatized encoding of the proposed label

805

Transmit the privatized encoding of the proposed label to the server

*FIG. 8A*

<u>810</u>

```
┌──────────────────────────────────────────────────────────┐  811
│                                                          │ ⌇
│   Cluster a set of unlabeled data on a client device     │
│   based on a set of labeled data received from a server  │
│                                                          │
└──────────────────────────────────────────────────────────┘
                             │
                             ▼
┌──────────────────────────────────────────────────────────┐  812
│                                                          │ ⌇
│  Generate a first set of labeled data on the client      │
│  device from the set of clustered unlabeled data         │
│                                                          │
└──────────────────────────────────────────────────────────┘
                             │
                             ▼
┌──────────────────────────────────────────────────────────┐  813
│                                                          │ ⌇
│  Infer a classification score for the unit of data from  │
│  the server based on a comparison of feature vectors of  │
│  the first local set of labeled data and the unit of data│
│                                                          │
└──────────────────────────────────────────────────────────┘
                             │
                             ▼
┌──────────────────────────────────────────────────────────┐  814
│                                                          │ ⌇
│  Determine a proposed label for the unit of data based   │
│  on the classification score                             │
│                                                          │
└──────────────────────────────────────────────────────────┘
```

*FIG. 8B*

900

Send a set of labeled data to a set of multiple mobile electronic devices, each of the mobile electronic devices including a first machine learning model

901

Send a unit of data to the set of multiple mobile electronic devices, the set of multiple electronic devices to generate a set of proposed labels for the unit of data

902

Receive a set of proposed labels for the unit of data from the set of mobile electronic devices, the set of proposed labels encoded to mask individual contributors of each proposed label in the set of proposed labels

903

Process the set of proposed labels to determine a label to assign to the unit of data

904

Add the unit of data and the determined label to a training set for a second machine learning model

905

*FIG. 9*

1000

| Client Labeling Framework<br>1002 | | |
|---|---|---|
| Vision/Image Framework<br>1004 | Language Processing<br>Framework<br>1006 | Other Frameworks<br>1008 |
| Core Machine Learning Framework<br>1010 | | |
| CPU Acceleration Layer<br>1012 | GPU Acceleration Layer<br>1014 | |

| Application Processor<br>1022 | Processing System<br>1020 | Graphics Processor<br>1024 |
|---|---|---|

*FIG. 10*

FIG. 11

1200

| | | | |
|---|---|---|---|
| Processor 1210 | ROM 1220 | RAM (volatile memory) 1225 | Storage (non-volatile memory) 1230 |

Bus 1205

| | | |
|---|---|---|
| Display Controller 1250 | I/O Controller 1260 | Modules 1270 |

| | |
|---|---|
| Display 1255 | I/O Components 1265 |

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9594741 B1

- US 9275347 B1

### Non-patent literature cited in the description

- Learning representations of emotional speech with deep convolutional generative adversarial networks. **CHANG JONATHAN et al.** 2017 IEEE INTERNATIONAL CONFERENCE ON ACOUSTICS, SPEECH AND SIGNAL PROCESSING (ICASSP). IEEE, 05 March 2017
- Secure Multi-label Classification over Encrypted Data in Cloud. **LIU YANG et al.** INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER]. SPRINGER, 57-73

- ML Confidential: Machine Learning on Encrypted Data. **THORE GRAEPEL et al.** INFORMATION SECURITY AND CRYPTOLOGY ICISC. SPRINGER, 2012, 1-21
- Cloud-enabled privacy-preserving collaborative learning for mobile sensing. **BIN LIU et al.** EMBEDDED NETWORK SENSOR SYSTEMS. ACM, 06 November 2012, 57-70
- Deep Models Under the GAN: Information Leakage from Collaborative Deep Learning. **BRILAND HITAJ et al.** ARXIV.ORG. CORNELL UNIVERSITY